(19) Europäisches Patentamt
European Patent Office
Office européen des brevets

(11) EP 2 632 964 B1

(12) EUROPÄISCHE PATENTSCHRIFT

(45) Veröffentlichungstag und Bekanntmachung des Hinweises auf die Patenterteilung:
06.05.2015 Patentblatt 2015/19

(21) Anmeldenummer: 11775799.7

(22) Anmeldetag: 26.10.2011

(51) Int Cl.:
C08F 297/04 (2006.01)         C08L 53/02 (2006.01)
C09J 153/02 (2006.01)         C08F 4/04 (2006.01)
C08J 5/18 (2006.01)

(86) Internationale Anmeldenummer:
PCT/EP2011/068768

(87) Internationale Veröffentlichungsnummer:
WO 2012/055919 (03.05.2012 Gazette 2012/18)

(54) **GUMMIELASTISCHE BLOCKCOPOLYMERISATE MIT EINER STERNFÖRMIGEN MOLEKULAREN ARCHITEKTUR, WOBEI DIE STERNFÖRMIGE MOLEKULARE ARCHITEKTUR MINDESTENS ZWEI UNTERSCHIEDLICHE STERNÄSTE AUFWEIST**

ELASTOMERIC BLOCK COPOLYMERS WITH A STAR-SHAPED MOLECULAR ARCHITECTURE, SAID STAR-SHAPED MOLECULAR ARCHITECTURE HAVING AT LEAST TWO DIFFERENT STAR ARMS

COPOLYMÈRES SÉQUENCÉS ÉLASTIQUES COMME DE LA GOMME AYANT UNE ARCHITECTURE MOLÉCULAIRE EN FORME D'ÉTOILE, L'ARCHITECTURE MOLÉCULAIRE EN FORME D'ÉTOILE PRÉSENTANT AU MOINS DEUX BRANCHES D'ÉTOILE DIFFÉRENTES

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 27.10.2010 EP 10189117

(43) Veröffentlichungstag der Anmeldung:
04.09.2013 Patentblatt 2013/36

(73) Patentinhaber: Styrolution Europe GmbH
60325 Frankfurt am Main (DE)

(72) Erfinder:
• KNOLL, Konrad
  68199 Mannheim (DE)

• WAGNER, Daniel
  67098 Bad Dürkheim (DE)
• COLOMBO, Andrea
  69115 Heidelberg (DE)
• VERLINDEN, Geert
  B-9190 Stekene (BE)

(74) Vertreter: Hollah, Dorothee et al
Isenbruck Bösl Hörschler LLP
Eastsite One
Seckenheimer Landstrasse 4
68163 Mannheim (DE)

(56) Entgegenhaltungen:
EP-A1- 0 436 225      EP-A1- 0 654 488
EP-A2- 0 316 671      WO-A1-95/35335
WO-A1-2010/072596    DE-A1- 2 550 226

## Beschreibung

Die vorliegende Erfindung betrifft gummielastische Blockcopolymerisate mit einer sternförmigen molekularen Architektur, wobei die sternförmige molekulare Architektur mindestens zwei unterschiedliche Sternäste aufweist, wobei mindestens ein Sternast aufgebaut ist aus mindestens einem einpolymerisierte Einheiten mindestens eines vinylaromatischen Monomeren aufweisenden, eine Hartphase bildenden Block A und gegebenenfalls mindestens einem ein oder mehrere verschiedene Dienmonomere aufweisenden, eine erste gummielastische (Weich-)Phase bildenden Block B und mindestens einem einpolymerisierte Einheiten sowohl mindestens eines vinylaromatischen Monomeren wie mindestens eines Diens aufweisenden elastomeren, eine Weichphase bildenden Block B/A, ein Verfahren zur Herstellung der erfindungsgemäßen gummielastischen Blockcopolymerisate, die Verwendung der erfindungsgemäßen gummielastischen Blockcopolymerisate zur Herstellung von Formteilen wie Folien, Schäumen, Thermoformlingen, Spritzgußformlingen; von Schläuchen oder Profilextrudaten; als Klebeschicht in Mehrschichtfolien; als Versiegelung; als Haftvermittler oder thermoplastische Komponente in Wood-Plastic-Composits; als Schmelzkleberkomponente; zur Schlagzähmodifizierung von Thermoplasten oder Elastomeren oder zur Verträglichkeitsvermittlung in Polymermischungen, sowie Folien, Schäume, Thermoformlinge, Spritgussformlinge, Schläuche oder Profilextrudate aufgebaut aus mindestens einem erfindungsgemäßen gummielastischen Blockcopolymerisat.

Blockcopolymere von Vinylaromaten (z. B. Styrol) und Dienen (z. B. 1,3-Butadien) sind Copolymere aus mehreren aneinander gereihten oder auf andere Weise verknüpften Polymermolekül-Bereichen (so genannten Blöcken), die in sich mehr oder weniger einheitlich aufgebaut sind. Sie können je nach Struktur und Gehalt an Dienmonomeren - bei einer bestimmten Temperatur - insgesamt elastomere, d. h. gummielastische Eigenschaften oder steife, nicht-gummielastische Eigenschaften haben, d. h. sie verhalten sich nach außen hin insgesamt entweder gummielastisch, ähnlich wie ein Polydien und haben z. B. als so genannte SB-Rubber Bedeutung, oder wie transparente, schlagzähe Styrolpolymere. Es ist üblich, in Anlehnung an die Bezeichnungen beim schlagzähmodifizierten Polystyrol diejenigen Molekülteile, die das gummielastische Verhalten bestimmten, als Weichphase und die starren Molekülteile (im Allgemeinen den reinen Polystyrolanteil) als Hartphase zu bezeichnen. SB-Rubber können nicht wie Thermoplaste verarbeitet, sondern müssen wie gewöhnliche Dienpolymere zum Gebrauch vulkanisiert werden, was ihre Verwendung stark einschränkt und die Verarbeitung verteuert.

Die vorliegende Erfindung betrifft im Allgemeinen transparente, rein thermoplastisch verarbeitbare gummielastische Blockcopolymere von Vinylaromaten und Dienen mit elastomerem Verhalten und hervorragenden mechanischen Eigenschaften, die in guten Raum-Zeit-Ausbeuten herstellbar sind.

Hierzu ist Folgendes voranzuschicken:

Die zu so genannten lebenden Polymeren (living polymers) führende anionische Polymerisation, bei der das Wachstum eines Kettenmoleküls an einem Kettenende stattfindet, das mangels spontaner Kettenabbruch- oder -Übertragungsreaktion theoretisch beliebig lange lebt (polymerisationsfähig bleibt), und die Umsetzung des lebenden Polymers mit ein- oder mehrfunktionellen Reaktionspartnern bietet eine vielseitig verwendbare Möglichkeit zum Aufbau von Blockcopolymeren, wobei die Auswahl an Monomeren allerdings beschränkt ist. In der Praxis haben im Wesentlichen Blockcopolymere von vinylaromatischen Verbindungen, d. h. Styrol und seinen Abkömmlingen einerseits, und Dienen, insbesondere Butadien oder Isopren andererseits, Bedeutung erlangt. Blockcopolymere erhält man dadurch, dass jeweils bis annähernd zur Erschöpfung eines Monomerenvorrats polymerisiert wird und das oder die Monomere dann gewechselt werden. Dieser Vorgang ist mehrfach wiederholbar.

Lineare Blockcopolymere werden z. B. in US 3,507,934 und US 4,122,134 beschrieben. Sternförmige Blockcopolymere sind z. B. in US 4,086,298, US 4,167,545 und US 3,639,517 beschrieben.

Das Eigenschaftsprofil dieser Blockcopolymere wird wesentlich durch den Gehalt einpolymerisierter Dienmonomere, d. h. Länge, Anordnung und Mengenverhältnis von Polydien- und Polystyrol-Blöcken geprägt. Darüber hinaus spielt die Art und Weise des Übergangs zwischen unterschiedlichen Blöcken eine wichtige Rolle. Der Einfluss scharfer und so genannter verschmierter (tapered) Übergänge (je nachdem, ob der Monomerenwechsel abrupt oder allmählich stattfindet) ist z. B. in WO 95/35335 A1 ausführlich beschrieben.

Bei Blockcopolymeren mit verschmiertem Blockübergang sind die Sequenzlängen keineswegs statistisch verteilt, sondern die Sequenzlänge der reinen Dienphase ist gegenüber der Polystyrolphase und somit das Massenverhältnis zugunsten der Dienphase verschoben. Dies hat den Nachteil, dass sich die negativen Eigenschaften des Dien-Polymeren bei der Verarbeitung im Werkstoffverhalten unnötig stark bemerkbar machen und auf der anderen Seite die styrolreiche Seite des Blocks die elastomeren Eigenschaften beeinträchtigt.

Besonders Materialien mit einem Dien-Gehalt von über 35 Gew.-%, die aufgrund ihres Eigenschaftsprofils (Zähigkeit, Transparenz, Gasdurchlässigkeit) für medizintechnische Anwendungen wie Infusionsschläuche, Infusiontropfkammern und Dehnfolien geeignet wären, sind nur sehr schwierig durch Profilextrusion, Spritzguss oder Schlauchfolienextrusion zu verarbeiten. Sie sind trotz Stabilisierung mit Antioxidantien und Radikalfängern thermisch sehr empfindlich und neigen zu Klebrigkeit, so dass man sich aufwendig mit Additiven behelfen muss. Das so genannte Blocken (Verkleben von Folien und Schläuchen auf der Rolle), die schlechte Entformbarkeit und die Neigung zu thermischer Vernetzung bei den üblichen Verarbeitungstemperaturen können die Verarbeitung durch Extrusion oder Spritzguss gänzlich unmöglich machen.

WO 95/35335 A1 schlägt hierzu vor, in einem Vinylaromat-Dien-Blockcopolymerisat aus Blöcken, die eine Hartphase (Blocktyp A) und solchen, die eine Weichphase bilden, an die Stelle eines reinen Polydienblocks als Weichphase einen Block B/A aus Dien- und Vinylaromaten-Einheiten treten zu lassen, der mehr oder weniger statistischen Aufbau besitzt. Der Aufbau kann dabei entlang der Kette im statistischen Mittel homogen oder inhomogen sein. Dadurch werden gummielastische Blockcopolymerisate erhalten, die großtechnisch einfach herstellbar sind, bei niedrigem Diengehalt ein Maximum an Zähigkeit besitzen und darüber hinaus wie Thermoplaste auf Extrudern und Spritzguss-Maschinen einfach zu verarbeiten sind. Diese gummielastischen Blockcopolymerisate bedeuten bereits einen erheblichen Fortschritt gegenüber den bis dahin bekannten styrol reichen Blockcopolymerisaten mit verschmierten Blockübergängen und den dienreichen Blockcopolymerisaten mit einem oder mehreren reinen Dienblöcken, wobei als Dien üblicherweise 1,3-Butadien oder Isopren verwendet wird.

Gemäß DE 196 15 533 A1 kann eine bei längerer thermischer Belastung und Scherbeanspruchung dennoch mögliche Gelbildung bei Extrusion der gummielastischen Blockcopolymerisate gemäß WO 95/35335 A1 dadurch vermindert werden, dass der Block (B/A) aus Dien- und Vinylaromaten-Einheiten einen streng statistischen Aufbau besitzt, wobei der relative Anteil an 1,2-Verknüpfungen des Polydiens, bezogen auf die Summe an 1,2- und 1,4-cis/trans-Verknüpfungen in jedem Fall unterhalb von etwa 12 bis 15 % liegt. Dies kann dadurch erreicht werden, dass die Copolymerisate von Vinylaromaten und Dienen durch Polymerisation in Gegenwart eines in unpolaren Lösungsmitteln löslichen Kaliumsalzes hergestellt werden.

Die in WO 95/35335 A1 und DE 196 15 533 A1 beschriebenen gummielastischen Blockcopolymerisate können im Hinblick auf ihre Scherstabilität noch weiter verbessert werden.

Aufgabe der vorliegenden Anmeldung ist es daher, gummielastische Blockcopolymerisate herzustellen, die die hervorragenden Eigenschaften der in WO 95/35335 A1 und DE 196 15 533 A1 beschriebenen gummielastischen Blockcopolymerisate insbesondere im Hinblick auf das Hystereseverhalten und die Reißfestigkeit bei einer weiter verbesserten Scherstabilität aufweisen und sich mit Hilfe einer wesentlich verbesserten Raum/Zeit-Ausbeute und damit einer wesentlich verbesserten Gesamtpolymerisationszeit herstellen lassen, wobei sie sich schnell bei niedrigem Gelgehalt aufarbeiten lassen.

Diese Aufgabe wird gelöst durch ein gummielastisches Blockcopolymerisat mit einer sternförmigen molekularen Architektur, wobei die sternförmige molekulare Architektur mindestens zwei unterschiedliche Sternäste aufweist, wobei mindestens ein Sternast aufgebaut ist aus mindestens einem, einpolymerisierte Einheiten mindestens eines vinylaromatischen Monomeren aufweisenden, eine Hartphase bildenden Block A und gegebenenfalls mindestens einem ein oder mehrere verschiedene Dienmonomere aufweisenden, eine erste gummielastische (Weich)Phase bildenden Block B und mindestens einem einpolymerisierte Einheiten sowohl mindestens eines vinylaromatischen Monomeren wie mindestens eines Diens aufweisenden elastomeren, eine Weichphase bildenden Blocks B/A, wobei die Glasübergangstemperatur $T_g$ des Blocks B/A unter 0 °C liegt und der Anteil der Hartphase an dem gesamten Blockcopolymerisat 1 bis 40 Gew.-% beträgt und der Gesamtgewichtsanteil der auf dem mindestens einen vinylaromatischen Monomeren basierenden Einheiten mindestens 40 Gew.-% beträgt.

Im Sinne der vorliegenden Anmeldung bedeutet sternförmige molekulare Architektur, dass das erfindungsgemäße gummielastische Blockcopolymerisat mindestens zwei Sternäste, bevorzugt 2 bis 10, besonders bevorzugt 3 bis 6, ganz besonders bevorzugt 3 oder 4 aufweist, die, bevorzugt durch ein Kopplungsmittel, derart miteinander verknüpft sind, dass mindestens 70 mol%, bevorzugt alle Sternäste (100% der Sternäste) einen außen liegenden Vinylaromatenblock aufweisen.

Die erfindungsgemäßen gummielastischen Blockcopolymerisate zeichnen sich dadurch aus, dass sie großtechnisch einfach und in hervorragenden Raum-Zeit-Ausbeuten herstellbar sind. Sie besitzen bei niedrigem Diengehalt ein Maximum an Zähigkeit und Reißfestigkeit sowie Minimum an Härte und lassen sich wie Thermoplaste auf Extrudern und Spritzgussmaschinen einfach und ohne störende Gelpartikelbildung (Stippenbildung) verarbeiten. Sie haben ein dem Weich-PVC ähnliches Eigenschaftsspektrum, können jedoch vollkommen frei von migrationsfähigen, niedermolekularen Weichmachern hergestellt werden. Sie sind unter den üblichen Verarbeitungsbedingungen (180°C bis 220°C) gegen Vernetzung stabil. Insbesondere zeichnen sich die erfindungsgemäßen gummielastischen Blockcopolymerisate durch ein hervorragendes Hystereseverhalten, d.h. sehr gutes Rückstellvermögen und Minimum an Restverformung bei einer hervorragenden Scherstabilität aus.

Zwar sind in WO 95/35335 A1 in Beispiel 11 gummielastische Blockcopolymerisate beschrieben, die durch Umsetzung mit Ethylformiat als Kopplungsmittel erhalten werden und in Beispiel 12 sternförmige gummielastische Blockcopolymerisate, die durch Kopplung mit epoxidiertem Leinsamenöl erhalten werden, und in DE 196 15 533 A1 in Beispiel 8 gummielastische Blockcopolymerisate, die durch Kopplung mit Ethylformiat erhalten werden, und in Beispiel 9 gummielastische Blockcopolymerisate, die durch Kopplung mit epoxidiertem Leinsamenöl erhalten werden, jedoch sind die Sternäste in diesen gummielastischen Blockcopolymerisaten alle identisch. Des Weiteren zeigt sich, dass die Reißfestigkeiten der gekoppelten gummielastischen Blockcopolymerisate mit identischen Sternästen schlechter sind als die Reißfestigkeiten der nicht gekoppelten gummielastischen Blockcopolymerisate, die in WO 95/35335 A1 und DE 196 15 533 A1 erwähnt sind.

Das gummielastische Blockcopolymerisat gemäß der vorliegenden Erfindung weist im Allgemeinen 2 bis 10, bevorzugt 3 bis 6, besonders bevorzugt 3 oder 4 Sternäste auf.

Ebenfalls erfindungsgemäß sind Mischungen von Sternen mit einer unterschiedlichen Sternastzahl sowie Mischungen von Dimeren mit Sternpolymeren, ungekoppelten Blockpolymeren und Sternen, und ungekoppelten Blockpolymeren, Dimeren und Sternpolymeren. Diese Mischungen werden beispielsweise bei der Verwendung von epoxidierten Pflanzenölen als Kopplungsmittel erhalten.

Ein weiterer Gegenstand der vorliegenden Erfindung ist daher eine Mischung von mindestens einem erfindungsgemäßen gummielastischen Blockcopolymerisat mit einer sternförmigen molekularen Architektur mit

(i) mindestens einem weiteren erfindungsgemäßen gummielastischen Blockcopolymerisat mit einer sternförmigen molekularen Architektur, wobei erfindungsgemäß Dimere, d.h. erfindungsgemäße Blockcopolymerisate mit zwei Sternästen, umfasst sind, und/oder

(ii) mit mindestens einem Blockcopolymerisat aufgebaut aus mindestens einem einpolymerisierte Einheiten mindestens eines vinylaromatischen Monomeren aufweisenden, eine Hartphase bildenden Block A und gegebenenfalls mindestens einem ein oder mehrere verschiedene Dienmonomere aufweisenden, eine erste gummielastische (Weich-)Phase bildenden Block B und mindestens einem einpolymerisierte Einheiten sowohl mindestens eines vinylaromatischen Monomeren wie mindestens eines Diens aufweisenden elastomeren, eine Weichphase bildenden Block B/A, wobei die Glasübergangstemperatur $T_g$ des Blocks B/A unter 0 °C liegt und der Anteil der Hartphase an dem gesamten Blockcopolymerisat 1 bis 40 Gew.-% beträgt und der Gesamtgewichtsanteil der auf dem mindestens einen vinylaromatischen Monomeren basierenden Einheiten mindestens 40 Gew.-% beträgt, d.h. mindestens einem ungekoppelten Blockcopolymerisat.

Das erfindungsgemäße gummielastische Blockcopolymerisat wird im Allgemeinen durch anionische Polymerisation mittels mindestens eines Initiators und unter Zugabe eines Kopplungsmittels hergestellt. Wesentliches Kennzeichen des Herstellungsverfahrens ist, dass ein Teil des mindestens einen Initiators zu Beginn der Polymerisation zugegeben wird und der restliche Teil des Initiators zu einem oder mehreren späteren Zeitpunkt(en). Das bedeutet, erfindungsgemäß findet eine zwei- oder mehrfache Initiierung statt. Weitere Verfahrensmerkmale, die wesentlich sind, um die erfindungsgemäßen gummielastischen Blockcopolymerisate mit sternförmiger molekularer Architektur zu erhalten, werden nachstehend aufgeführt.

Die vorstehend genannten Mischungen können beispielsweise durch Einsatz von epoxidierten Pflanzenölen als Kopplungsmittel erhalten werden, wie vorstehend erwähnt.

*Hartphase (Block A)*

Der mindestens eine die Hartphase bildende Block A ist aus mindestens einem vinylaromatischen Monomeren aufgebaut. Geeignete vinylaromatische Monomere sind ausgewählt aus Styrol und dessen in α-Stellung oder am aromatischen Ring mit Alkylresten mit 1 bis 4 Kohlenstoffatomen substituierten Derivaten, und Mischungen davon sowie in Kombination mit 1,1-Diphenylethylen. Bevorzugte vinylaromatische Monomere sind Styrol, a-Methylstyrol, p-Methylstyrol, Ethylstyrol, tert.-Butylstyrol, Vinyltoluol, 1,1-Diphenylethylen und Mischungen davon. Besonders bevorzugt wird als vinylaromatisches Monomer Styrol eingesetzt.

Jeder Sternast des gummielastischen Blockcopolymerisats kann einen oder mehrere die Hartphase bildenden Block A aufweisen. Dabei können - wenn mehrere Blöcke A vorliegen - diese Blöcke unterschiedliche Molmassen aufweisen. Diese unterschiedlichen Blöcke A können jeweils in einem Sternast vorliegen. Des Weiteren können die Blöcke in den verschiedenen Sternästen unterschiedlich aufgebaut sein. Grundsätzlich ist es auch möglich, dass nur einer der Sternäste des gummielastischen Blockcopolymerisats einen eine Hartphase bildenden Block A aufweist. In einer bevorzugten Ausführungsform weist jedoch jeder der Sternäste des gummielastischen Blockcopolymerisats mindestens einen eine Hartphase bildenden Block A auf. Ganz besonders bevorzugt liegen in mindestens einem Sternast zwei Blöcke A mit unterschiedlicher Molmasse vor, wobei die beiden Blöcke A sich bevorzugt an den beiden Enden des Stern astes befinden, also der erste Block A mit dem Initiatorrest und der zweite Block A dem Kopplungsmittel verbunden ist.

Das Molekulargewicht ($M_w$) der Blöcke A beträgt im Allgemeinen 1000 bis 200000, bevorzugt 3000 bis 80000, besonders bevorzugt zwischen 6000 und 40000 [g/mol], ermittelt mittels GPC bei Polystyroleichung. Wie bereits vorstehend erwähnt, können innerhalb eines gummielastischen Blockcopolymermoleküls Blöcke A mit unterschiedlichen Molmassen vorliegen.

Das in der vorliegenden Anmeldung angegebene Molekulargewicht der einzelnen Blöcke sowie das Gesamtmolekulargewicht des gummielastischen Blockcopolymerisats ist das gewichtsmittlere Molekulargewicht (M$_w$), das mittels GPC mit Polystyroleichung ermittelt wird.

Aufgrund der engen Molekulargewichtsverteilung der durch lebende Polymerisation hergestellten Polymere ist das gewichtsmittlere Molekulargewicht M$_w$ praktisch mit dem zahlenmittleren Molekulargewicht M$_n$ identisch.

Der die Hartphase bildende Block A weist im Allgemeinen eine Glasübergangstemperatur T$_g$ von >25 °C, bevorzugt >50 °C, besonders bevorzugt >70°C auf.

Insgesamt weist das erfindungsgemäße gummielastische Blockcopolymerisat eine Hartphase von 1 bis 40 Gew-%, bezogen auf die Gesamtmasse des gummielastischen Blockcopolymerisats, bevorzugt 10 bis 40 Gew.-%, besonders bevorzugt 20 bis 37 Gew.-% auf. Der Gesamtmassenanteil des gummielastischen Blockcopolymerisats ergibt sich aus der Summe der Massenanteile der Hartphase und der Summe der Massenanteile der Weichphase, wobei der Gesamtmassenanteil 100 Gew.-% beträgt.

Messbar ist der Massenanteil sowohl der Hartphase als auch der Weichphase mittels Festkörper-NMR-Spektroskopie. Der Anteil der vinylaromatischen Blöcke lässt sich nach Osmium-Abbau des Polydienanteils durch Fällen und Auswiegen bestimmen. Das künftige Phasenverhältnis eines Polymeren lässt sich auch aus den eingesetzten Monomermengen berechnen, wenn man jedes Mal vollständig auspolymerisieren lässt.

*Eine erste gummielastische (Weich)Phase bildender Block B*

Gegebenenfalls liegt in dem gummielastischen Blockcopolymerisat der vorliegenden Erfindung in mindestens einem der Sternäste mindestens ein eine gummielastische (Weich)Phase bildender Block B vor, der aus einem oder mehreren verschiedenen Dienmonomeren gebildet wird.

Geeignete Dienmonomere sind Diene mit konjugierten Doppelbindungen, bevorzugt ausgewählt aus 1,3-Butadien, Isopren, 2,3-Dimethylbutadien, 1,3-Pentadien, 1,3-Hexadien, Phenylbutadien, Piperylen und Mischungen davon. Besonders bevorzugt sind 1,3-Butadien und Isopren und Mischungen davon. Wenn im Folgenden "Butadien" erwähnt ist, ist damit immer 1,3-Butadien gemeint.

Im Allgemeinen stellt dieser eine erste gummielastische (Weich-)Phase bildende Block B eine spezielle Ausführungsform eines eine Weichphase bildenden Blocks B/A dar, der üblicherweise einpolymerisierte Einheiten sowohl mindestens eines vinylaromatischen Monomeren wie mindestens eines Diens aufweist. In dem Fall, dass keine vinylaromatischen Monomeren vorliegen, erhält man einen Block B, der ausschließlich aus Dienmonomeren aufgebaut ist.

Das Molekulargewicht (M$_w$) eines solchen Blocks B liegt im Allgemeinen bei 10000 bis 300000, bevorzugt 20000 bis 150000 [g/mol], gemessen mittels GPC mit Polystyroleichung. Innerhalb eines gummielastischen Blockcopolymerisats sowie innerhalb eines Sternastes können die Blöcke B unterschiedliche Molmassen haben. In einer Ausführungsform der vorliegenden Anmeldung weist das gummielastische Blockcopolymerisat mindestens einen Sternast auf, der mindestens zwei Blöcke B enthält, wobei diese identische oder unterschiedliche Molekulargewichte aufweisen können.

Der die Weichphase bildende Block B weist im Allgemeinen eine Glasübergangstemperatur Tg von <0 °C, bevorzugt <-10°C und besonders bevorzugt <-20°C auf.

*Eine Weichphase bildender Block B/A*

Mindestens einer der Sternäste des gummielastischen Blockcopolymerisats weist mindestens einen eine Weichphase bildenden Block B/A auf, wobei dieser aus polymerisierten Einheiten sowohl mindestens eines vinylaromatischen Monomeren als auch mindestens eines Diens aufgebaut ist (bezüglich eines Blocks B in dem Fall, dass keine vinylaromatischen Monomeren vorliegen, wurden vorstehend Ausführungen gemacht).

Geeignete vinylaromatische Monomere sowie geeignete Diene sind die vorstehend bezüglich der Blöcke A und B genannten vinylaromatischen Monomere bzw. Diene. Eine besonders bevorzugte Kombination (B/A) der dien- und vinylaromatischen Monomere ist die Kombination 1,3-Butadien und/oder Isopren als Dienmonomere und Styrol als vinylaromatisches Monomer. Eine ganz besonders bevorzugte Kombination ist die Kombination 1,3-Butadien/Styrol.

Üblicherweise wird der B/A-Block in dem erfindungsgemäßen gummielastischen Blockcopolymer aus 1 bis 65 Gew.-% vinylaromatischen Monomeren und 35 bis 99 Gew.-% Dienmonomeren aufgebaut. Besonders bevorzugt hat der B/A-Block einen Anteil an vinylaromatischen Monomeren von 10 bis 60 Gew.-% und einen Dienanteil von 90 bis 40 Gew.-% und ganz besonders bevorzugt einen Anteil an vinylaromatischen Monomeren von 30 bis 50 Gew.-% und einen Dienanteil von 70 bis 50 Gew.-%.

Die Glasübergangstemperatur T$_g$ des Blocks B/A liegt unter 0 °C, bevorzugt unter - 10 °C, besonders bevorzugt unter -20 °C.

Das Molekulargewicht (M$_w$) des Blocks B/A beträgt üblicherweise 2000 bis 250000 [g/mol], bevorzugt 5000 bis 150000 [g/mol], gemessen mittels GPC mit Polystyroleichung. Verschiedene Blöcke B/A in dem gummielastischen Blockcopolymerisat bzw. innerhalb eines Sternastes können unterschiedliche Molekulargewichte aufweisen.

Für die mechanischen Eigenschaften der gummielastischen Blockcopolymerisate ist der Massenanteil der Weichphase im Festkörper von entscheidender Bedeutung. Erfindungsgemäß liegt der Massenanteil der aus dien- und vinylaromatischen Sequenzen aufgebauten Weichphase bei 60 bis 99 Gew.-%, bevorzugt 60 bis 90 Gew.-%, besonders bevorzugt 63 bis 80 Gew.-%, ganz besonders bevorzugt 65 bis 75 Gew.-%. Entsprechend liegt der Massenanteil der Hartphase wie vorstehend erwähnt bei 1 bis 40 Gew-%, bevorzugt 10 bis 40 Gew.-%, besonders bevorzugt 20 bis 37 Gew-%, ganz besonders bevorzugt 25 bis 35 Gew-%, wobei die Gesamtsumme aus Hart- und Weichphase 100 Gew-% ergibt. In dem Fall, dass eine oder mehrere ausschließlich aus Dieneinheiten aufgebaute Weichphase B in dem Blockcopolymerisat vorliegen, reduziert sich der Massenanteil der aus dien- und vinylaromatischen Sequenzen aufgebauten Weichphase entsprechend. Der Massenanteil der Weichphase B kann 0 bis 50 Gew.-%, bezogen auf die Gesamtmasse des gummielastischen Blockcopolymerisats, betragen, bevorzugt 0,5 bis 20 Gew.-%, besonders bevorzugt 1 bis 10 Gew.-%, ganz besonders bevorzugt 3 bis 6 Gew.-%.

Es ist darauf hinzuweisen, dass zwischen den nachstehend erwähnten Mengenverhältnissen von vinylaromatischer Verbindung und Dien, den vorstehend angegebenen Grenzwerten der Phasenanteile und der Zusammensetzung, die sich aus den erfindungsgemäßen Bereichen der Glastemperatur ergeben kann, keine strenge Übereinstimmung besteht, da es sich um jeweils auf voll Zehnerstellen gerundete Zahlenwerte handelt. Dies könnte vielmehr nur zufällig der Fall sein.

Der Anteil an 1,2-Verknüpfungen im Verhältnis zur Summe aus 1,2 und 1,4-Verknüpfungen des Diens kann im Allgemeinen 8 bis 90 % betragen, in Abhängigkeit von dem eingesetzten Randomizer. In dem Fall, dass eine Kaliumverbindung als Randomizer eingesetzt wird, beträgt der Anteil an 1,2-Verknüpfungen im Verhältnis zur Summe aus 1,2- und 1,4-Verknüpfungen des Diens im Allgemeinen 9 bis 14 %. In dem Fall, dass eine Lewis-Base eingesetzt wird, erreicht der Anteil an 1,2- bzw. 1,4-Verknüpfungen der Dieneinheiten im Allgemeinen einen Wert von 20 bis 50 % für die 1,2- und 80 bis 50 % für die 1,4-Verknüpfungen, jeweils bezogen auf die Gesamtmenge an einpolymerisierten Dieneinheiten (für ersteren Fall siehe DE 196 15 533 A1 und für den zweiten Fall WO 95/35335 A1).

Bei dem eine Weichphase bildenden Kautschukblock B/A kann es sich um einen Kautschukblock handeln, der wiederum aus zwei oder mehr verschiedenen Blöcken B/A gebildet wird, wobei sich die Blöcke B/A in ihren Molekulargewichten und/oder in ihrem Vinylaromat/Dien-Verhältnis unterscheiden. In einer Ausführungsform der vorliegenden Erfindung kann die Weichphase in die folgenden Blöcke unterteilt sein:

$$(B/A)_1 \text{-} (B/A)_2$$

$$(B/A)_1 \text{-} (B/A)_2 \text{-} (B/A)_1$$

$$(B/A)_1 \text{-} (B/A)_2 \text{-} (B/A)_3,$$

deren Vinylaromat/Dien-Verhältnis in den einzelnen Blöcken B/A unterschiedlich ist oder sich innerhalb eines Blocks in den Grenzen $(B/A)_1 < (B/A)_2$ kontinuierlich ändert, wobei die Glasübergangstemperatur $T_g$ jedes Teilblocks unter 0 °C, bevorzugt unter -10 °C und besonders bevorzugt unter -15°C liegt.

In einer weiteren Ausführungsform weist mindestens einer der Blöcke B/A in dem gummielastischen Blockcopolymerisat gemäß der vorliegenden Anmeldung p sich wiederholende Abschnitte (Teilblöcke) mit wechselndem Monomeraufbau auf, wie sie durch p-portionsweise Zugabe der Monomeren gebildet werden, wobei p 2 bis 10 bedeutet. Oder das Monomerenverhältnis ändert sich in Form eines Gradienten, z.B. bis hin zur ausschließlichen Zugabe des Monomers B, z.B. kann sich die Zusammensetzung innerhalb des Blocks B/A derart ändern, dass keine definierten Teilblöcke gebildet werden, sondern dass ein Zusammensetzungsradient vorkommt, wobei bevorzugt $(B/A)_{p1} > (B/A)_{p2} < (B/A)_{p3}$ bedeutet, wobei die Teilabschnitte $(B/A)_{p1}$ und/oder $(B/A)_{p3}$ in einer Ausführungsform durch $B_{p1}$ und $B_{p3}$ ersetzt sein können.

Das bedeutet, dass der Block B/A in einer bevorzugten Ausführungsform eine nicht einheitliche Zusammensetzung dahingehend aufweist, dass in der Nähe des oder der A-Blöcke in mindestens einem der Sternäste des gummielastischen Blockcopolymerisats der Diengehalt höher ist als der Durchschnitt des gesamten B/A-Blocks. Wie vorstehend erwähnt, kann das z. B. dadurch erreicht werden, dass der B/A-Block in drei separate Blöcke $(B/A)_1 \text{-} (B/A)_2 \text{-} (B/A)_3$ unterteilt wird, wobei $(B/A)_1$ und $(B/A)_3$ einen höheren Diengehalt aufweisen als $(B/A)_2$ bis hin zu dem Punkt, dass die Teilblöcke $(B/A)_1$ und $(B/A)_3$ durch die Teilblöcke $B_1$ und $B_3$ ersetzt sind. Den gleichen Effekt kann man auch durch eine langsame Zulaufdosierung der beiden Monomere B und A bei der Herstellung des Kautschukblocks B/A erreichen. Die Zusammensetzungsveränderung ist dann nicht sprunghaft, sondern graduell, wie vorstehend ausgeführt wurde. In diesem Fall spricht man von einem "controlled distribution polymer", wie z. B. in US 2003/0181584 A1 erläutert wird.

*Gummielastisches Blockcopolymerisat*

In einer bevorzugten Ausführungsform handelt es sich bei dem gummielastischen Blockcopolymerisat um ein gummielastisches Blockcopolymerisat, worin der mindestens eine, eine Hartphase bildende Block A aus Styrolmonomeren aufgebaut ist und der mindestens eine gegebenenfalls vorliegende, eine erste gummielastische (Weich)Phase bildende Block B aus 1,3-Butadienmonomeren und/oder Isoprenmonomeren aufgebaut ist und der mindestens eine, eine Weichphase bildende Block B/A, aus Styrolmonomeren als vinylaromatischen Monomeren und 1,3-Butadienmonomeren und/oder Isoprenmonomeren als Dienmonomeren aufgebaut ist.

Besonders bevorzugte gummielastische Blockcopolymerisate weisen z. B. die folgenden allgemeinen Formeln auf:

$$Y[(B/A-A)_n]_m[A]_l$$

$$Y[(A-B/A)_n-A]_m[A]_l$$

wobei A für einen vinylaromatischen Block und B/A für einen einpolymerisierte Einheiten sowohl mindestens eines vinylaromatischen Monomeren wie mindestens eines Diens aufweisenden elastomeren Block steht, der wiederum selbst in elastomere Blöcke mit unterschiedlichem Dien/Vinylaromat-Verhältnis aufgeteilt sein oder einen Gradienten aufweisen kann, Y der Rest eines (m + l)-funktionellen Kopplungsmittels ist, und m und l unabhängig voneinander 1 bis 10, bevorzugt 1, 2, 3 oder 4, besonders bevorzugt 1 oder 2 bedeuten, wobei die Summe (m + l) der Funktionalität des Kopplungsmittels entspricht, und n 1 bis 10, bevorzugt 1, 2 oder 3 und besonders bevorzugt 1 bedeutet. Besonders bevorzugt bedeutet m 2.

Geeignete vinylaromatische Blöcke A und Blöcke B/A, die einpolymerisierte Einheiten sowohl mindestens eines vinylaromatischen Monomeren als auch mindestens eines Diens aufweisen, sind vorstehend genannt.

Geeignete Kopplungsmittel werden nachstehend erwähnt. Aus den nachstehend genannten Kopplungsmitteln ist der Rest Y für einen Fachmann leicht zu ermitteln.

In einer bevorzugten Ausführungsform betrifft die vorliegende Erfindung ein gummielastisches Copolymerisat, worin m in den vorstehend genannten Formeln 2 bedeutet.

Der Gewichtsanteil des Diens im gesamten Blockcopolymer liegt im Allgemeinen bei 15 bis 65 Gew.-%, derjenige der vinylaromatischen Komponente entsprechend bei 35 bis 85 Gew.-%. Besonders bevorzugt sind Butadien-Styrol-Blockcopolymere mit einer Monomerzusammensetzung umfassend 25 bis 60 Gew.-% Dien und 40 bis 75 % mindestens einer vinylaromatischen Verbindung.

Die erfindungsgemäßen gummielastischen Blockcopolymerisate weisen "Pentablockcharakter" auf, während WO 95/35335 A1 und DE 196 15 533 A1 im Wesentlichen Dreiblockcopolymerisate betreffen.

Ein Sternast des erfindungsgemäßen gummielastischen Blockcopolymerisats kann z. B. wie folgt aussehen:

A1-(B/A)$_1$-(B/A)$_2$-(B/A)$_3$-A2-Y', wobei Y' den Rest eines Kopplungsmittels darstellt, das - in Abhängigkeit von der Funktionalität des eingesetzten Kopplungsmittels - mindestens eine verfügbare Kopplungsstelle hat. Dabei stellen A1 und A2 jeweils einen eine Hartphase bildenden Block, aufgebaut aus vinylaromatischen Einheiten, bevorzugt Styrol, dar und (B/A)$_1$, (B/A)$_2$ und (B/A)$_3$ stellen jeweils einen eine Weichphase bildenden Block, aufgebaut aus dien- und vinylaromatischen Einheiten, bevorzugt 1,3-Butadien und Styrol, dar, wobei der Block (B/A)$_1$ und/oder (B/A)$_3$ jeweils durch einen Dienblock B$_1$ und/oder B$_3$ ersetzt sein kann. Die Variationsmöglichkeiten des vorstehend genannten Sternastes bestehen im jeweiligen Gehalt an vinylaromatischem Monomer in den Segmenten (B/A)$_n$ (also (B/A)$_1$, (B/A)$_2$, (B/A)$_3$) und in deren Molmasse, d. h. vor allem dem jeweiligen Massenanteil der einzelnen Segmente an der Gesamtmasse des Weichblocks sowie den Massenanteilen von A1 und A2. Es ist darauf zu achten, dass sich der Gesamtdiengehalt in den vorstehend genannten Grenzen bewegt, um ein gummielastisches Blockcopolymerisat mit den gewünschten vorteilhaften Eigenschaften zu erhalten. Des Weiteren sollte der Gehalt an vinylaromatischem Monomer in dem Block (B/A)$_2$ nicht zu hoch sein, da sonst die Glasstufe des inneren Bereichs der Weichphasendomänen ansteigt und als Folge die Hysterese steigt. Generell sollte der Block (B/A)$_2$ einen höheren Styrolgehalt aufweisen als die Blöcke (B/A)$_1$ und (B/A)$_3$, wie vorstehend bezüglich der Zusammensetzung der Weichphase B/A ausgeführt ist. Dabei ist in dem Block (B/A)$_2$ beispielsweise ein Styrolgehalt von 40 bis 60 Gew.-%, bevorzugt 45 bis 55 Gew.-% wünschenswert, während die Blöcke (B/A)$_1$ und (B/A)$_3$ einen entsprechend niedrigeren Styrolgehalt aufweisen von im Allgemeinen 20 bis 50 Gew.-%, bevorzugt 30 bis 45 Gew.-%. Diese Variation kann - wie vorstehend bezüglich der Zusammensetzung des Blocks B/A erwähnt - bis zu reinen Dienblöcken getrieben werden, wobei mindestens ein Sternast in dem erfindungsgemäßen gummielastischen Blockcopolymerisat dann z. B. die folgende Struktur aufweist: A1-B$_1$-(B/A)$_2$-B$_3$-A2-Y', wobei die Blockmolmasse der Butadienblöcke so klein sein sollte, dass keine eigenen Butadiendomänen auftreten, d. h., die Molmasse der Butadienblöcke B$_1$ und B$_3$ bzw. generell reiner Butadienblöcke in einem der Sternäste des gummielastischen Blockcopolymerisats ist bevorzugt < 8000 g/mol, besonders bevorzugt < 6000 g/mol. Diese vorstehend erwähnte Art der Variation muss nicht symmetrisch durchgeführt werden, sondern kann sich im Extremfall z. B. auf (B/A)$_1$ und (B/A)$_2$ oder (B/A)$_3$ und (B/A)$_2$ beschränken.

Bezüglich der Hartphasen in dem vorstehend genannten Sternast A1-(B/A)$_1$-(B/A)$_2$-(B/A)$_3$-A2-Y' bzw. A1-B1-B/A-B2-A2-Y' wird in einer bevorzugten Ausführungsform so ausgewählt, dass der Massenanteil von A1 größer ist als der Massenanteil von A2. Besonders bevorzugt ist er mindestens doppelt so groß.

Die vorliegende Erfindung betrifft somit in einer bevorzugten Ausführungsform ein erfindungsgemäßes gummielastisches Blockcopolymerisat, worin zwei Blöcke A in mindestens einem Sternast vorliegen, bevorzugt mit unterschiedlichen Molmassen, besonders bevorzugt hat der in dem mindestens einen Sternast außen liegende Block (A1) eine größere Molmasse als der innen liegende Block (A2).

Die Gesamtmasse der erfindungsgemäßen gummiartigen Blockcopolymerisate beträgt im Allgemeinen $M_w$ (gewichtsmittlere Molmasse) 40000 bis 1000000, bevorzugt 70000 bis 250000, besonders bevorzugt 120000 bis 200000 g/mol (gemessen mittels GPC mit Polystyroleichung, 35 % Butadien). Dies entspricht einer Schmelzviskosität MVR von im Allgemeinen 200 bis 0,1, bevorzugt 50 bis 1, besonders bevorzugt 6 bis 20 (5 kp, 200 °C, 10 min$^{-1}$). Solche gummiartigen Blockcopolymerisate können im bevorzugten Bereich ohne weitere Zusätze wie Fließhilfsmittel oder Öle verarbeitet werden.

Höhere als die vorstehend erwähnten Molmassen können sinnvoll sein, wenn zur Erniedrigung der Härte Weichmacheröl zugesetzt werden soll. Geeignete Öle weisen eine Polarität auf, die höher als die von medizinischem Weißöl, aber niedriger als die der gängigen PVC-Weichmacher ist. Besonders bewährt haben sich Ölmischungen mit Weißöl zur genauen Kontrolle der Polarität. Als polare Komponente eignen sich Pflanzenöle wie Sonnenblumenöl, aber auch synthetische Ester und hier vor allem aliphatische Ester wie Dioctyladipat, Diisononyladipat und insbesondere 1,2-Cyclohexandicarbonsäurediisononylester (z. B. Hexamoll DINCH® der BASF SE), die bevorzugt in Abmischung mit Weißöl eingesetzt werden. Der Weißölanteil in der Ölmischung beträgt bevorzugt 10 bis 70 Gew.-%, besonders bevorzugt 20 bis 50 Gew.-%, wobei die Gesamtsumme aus Weißöl und mindestens einer polaren Komponente 100 Gew.-% beträgt. Ganz besonders geeignet sind gesättigte, nicht kristalline aliphatische Ester mit einem noch höheren aliphatischen Anteil im Verhältnis zu den Estergruppen, also höhermolekulareren Dicarbonsäuren als Adipinsäure und/oder höhermolekulareren Alkoholen als Nonanol.

*Herstellung der erfindungsgemäßen gummiartigen Blockcopolymerisate*

Die erfindungsgemäßen gummiartigen Blockcopolymerisate werden durch anionische Polymerisation im Allgemeinen in einem unpolaren Lösungsmittel hergestellt, wobei die Initiierung mittels eines Initiators, der im Allgemeinen eine metallorganische Verbindung ist, erfolgt. Erfindungsgemäß erfolgt die Herstellung unter Zugabe mindestens eines Kopplungsmittels, im Allgemeinen am Ende der Polymerisation, wobei ein Teil des mindestens einen Initiators zu Beginn der Polymerisation und der restliche Teil des Initiators zu einem oder mehreren späteren Zeitpunkt(en) zugegeben wird.

Durch dieses erfindungsgemäße Verfahren ist es möglich, die speziellen erfindungsgemäßen gummielastischen Blockcopolymerisate herzustellen, die sich insbesondere durch eine sternförmige molekulare Architektur mit mindestens zwei verschiedenen Sternästen auszeichnen.

Geeignete Initiatoren in der anionischen Polymerisation sind metallorganische Verbindungen, bevorzugt Verbindungen der Alkalimetalle, besonders bevorzugt des Lithiums. Beispiele für Initiatoren sind Methyllithium, Ethyllithium, Propyllithium, n-Butyllithium, sek.-Butyllithium und tert.-Butyllithium. Die metallorganische Verbindung wird im Allgemeinen als Lösung in einem chemisch indifferenten (inerten) Kohlenwasserstoff zugesetzt. Die Dosierung richtet sich grundsätzlich nach dem angestrebten Molekulargewicht des Polymerisats, liegt aber in der Regel bei 0,002 bis 5 Mol.-%, wenn man sie auf die Monomeren bezieht. Dabei bezieht sich die vorstehende Menge an Initiator auf die Gesamtmenge des eingesetzten Initiators, der - wie vorstehend erwähnt - in mindestens zwei Chargen zugegeben wird. Als Lösungsmittel werden bevorzugt aliphatische Kohlenwasserstoffe wie Cyclohexan oder Methylcyclohexan verwendet. Zusätzlich wird bei der anionischen Polymerisation im Allgemeinen entweder ein polares Cosolvens (als Randomizer) zugegeben, wobei die Vorstellung besteht, dass das Cosolvenz gegenüber dem Metallkation des Initiators als Lewis-Base wirkt. Als Lewis-Basen werden polare aprotische Verbindungen wie Ether und tertiäre Amine bevorzugt. Beispiele für besonders effektive Ether sind Tetrahydrofuran, und aliphatische Polyether wie Ethylenglykoldimethylether und Diethylenglykoldimethylether. Als tertiäre Amine sind Triethylamin, Tributylamin und Pyridin zu nennen. Das polare Cosolvens wird dem unpolaren Lösungsmittel in einer Menge von z. B. 0,5 bis 5 Vol.-% zugesetzt. Besonders bevorzugt ist Tetrahydrofuran in einer Menge von 0,1 bis 0,6 Vol.-%. In vielen Fällen ist eine Menge von 0,2 bis 0.4 Vol.-% ganz besonders bevorzugt.

Durch die Dosierung und die Struktur der Lewis-Base werden die Copolymerisationsparameter und der Anteil an 1,2- bzw. 1,4-Verknüpfungen der Dieneinheiten bestimmt. Die so hergestellten gummiartigen Blockcopolymerisate haben im Allgemeinen einen Anteil von 20 bis 80 % an 1,2-Verknüpfungen und 80 bis 20 % an 1,4-Verknüpfungen, bezogen auf alle Dieneinheiten. Sie eignen sich auch zur späteren Hydrierung, wenn witterungsbeständige gummiartigen Blockcopolymerisate bereitgestellt werden sollen. Besonders für die Hydrierung bevorzugt ist ein Anteil von 30 bis 60 % und besonders bevorzugt 40 bis 50% an 1,2-Verknüpfungen, die nach der Hydrierung als Ethyl-Seitengruppen oder in anderer Sichtweise Butylenmonomereinheiten vorliegen. Die 1,4-Verknüpfungen werden durch die Hydrierung zu zwei Ethyleneinheiten in der Hauptkette. Ab 40% Butyleneinheiten, die beispielsweise durch 0,5 Vol.-% THF bezogen auf Lösungsmittel erhalten werden können, tritt keine Kristallisation nach der Hydrierung mehr ein. Bei weniger als 40% Butyleneinheiten wird nach Hydrierung ein teilkristallines Blockpolymerisat mit höherer Härte erhalten.

In einer weiteren Ausführungsform wird - anstelle des Cosolvens - ein lösliches Kaliumsalz (als Randomizer) zugegeben, insbesondere ein Kaliumalkoholat. Es besteht dabei die Vorstellung, dass das Kaliumsalz mit dem Lithium-Carbanion-Ionenpaar einen Metallaustausch eingeht, wobei sich Kalium-Carbanionen bilden, die bevorzugt das vinylaromatische Monomer, besonders bevorzugt Styrol, anlagern, während die Lithium-Carbanionen bevorzugt das Dien, besonders bevorzugt Butadien, addieren. Da Kalium-Carbanionen wesentlich reaktiver sind, genügt schon ein kleiner Bruchteil, nämlich 1/10 bis 1/50, um zusammen mit den überwiegenden Lithium-Carbanionen im Mittel den Einbau von vinylaromatischen Monomeren, besonders bevorzugt Styrol, und Dienen, besonders bevorzugt Butadien, ähnlich wahrscheinlich zu machen. Für einen annähernd gleichen Einbau von vinylaromatischem Monomer, bevorzugt Styrol, und Dien, bevorzugt Butadien, wird bevorzugt ein molares Lithium/Kalium-Verhältnis von 33 bis 39 gewählt. Ferner besteht die Vorstellung, dass es während des Polymerisationsvorgangs häufig zu einem Metallaustausch zwischen den lebenden Ketten sowie zwischen einer lebenden Kette und dem gelösten Salz kommt, sodass dieselbe Kette einmal bevorzugt ein vinylaromatisches Monomer, besonders bevorzugt Styrol, und dann wieder ein Dien, besonders bevorzugt Butadien, addiert. Im Ergebnis sind die Copolymerisationsparameter dann für das vinylaromatische Monomer und das Dien annähernd gleich. Als Kaliumsalze eignen sich vor allem Kaliumalkoholate, insbesondere tertiäre Alkoholate mit mindestens sieben Kohlenstoffatomen. Typische korrespondierende Alkohole sind z. B. 3-Ethyl-3-pentanol und 2,3-Dimethyl-3-pentanol. Als besonders geeignet erweist sich Tetrahydrolinalool (3,7-Dimethyl-3-octanol) und 2-Methyl-2-butanol. Grundsätzlich geeignet sind neben den Kaliumalkoholaten auch andere Kaliumsalze, die sich gegenüber Metallalkylen inert verhalten. Zu nennen sind Dialkylkaliumamide, alkylierte Diarylkaliumamide, Alkylthiolate und alkylierte Arylthiolate. Die mit Kaliumsalzen als Randomizer hergestellten gummiartigen Blockcopolymerisate haben im Allgemeinen einen Anteil von 9 bis 14% an 1,2-Verknüpfungen und 91 bis 86 % an 1,4-Verknüpfungen, bezogen auf alle Dieneinheiten.

Ein geeignetes Verfahren zur Herstellung der erfindungsgemäßen gummiartigen Blockcopolymerisate unter Einsatz eines löslichen Kaliumsalzes ist in DE 196 15 533 A1 offenbart. Ein geeignetes Verfahren zur Herstellung der erfindungsgemäßen gummielastischen Blockcopolymerisate in Anwesenheit eines polaren Cosolvens ist in WO 95/35335 offenbart.

Eine bevorzugte Ausführungsform, um einen erhöhten Anteil an Monomer B am Übergang zum A1-Block beispielsweise im Sternast A1-(B/A)$_1$-(B/A)$_2$-(B/A)$_3$-A2-Y' zu erzielen, besteht darin, eine etwas reduzierte Menge Randomizer bei der Polymerisation des (B/A)$_1$-Blocks einzusetzen.

Hierunter ist in einer Ausführungsform der vorliegenden Erfindung die Verwendung von beispielsweise 0,20 bis 0,26 Vol.-% THF bezogen auf Cyclohexan statt den für einen gleichmäßigen Polymereinbau erforderlichen 0,27 bis 0,33 Vol.-% THF zu verstehen. Für die Polymerisation der nachfolgenden (B/A)-Blöcke ist eine Nachdosierung von THF auf 0,27 bis 0,33 Vol.-% THF bevorzugt.

In einer weiteren Ausführungsform wird als Randomizer ein lösliches Kaliumsalz, bevorzugt ein Kaliumalkoholat, eingesetzt, wobei zu Beginn der Polymerisation des B/A-Blocks ein molares Lithium/Kalium-Verhältnis von > 39 gewählt, wird, d.h. ein Lithium/Kalium-Verhältnis, das einen überwiegenden Einbau des Diens, bevorzugt Butadien, im Verhältnis zu dem vinylaromatischen Monomer, bevorzugt Styrol, bewirkt. Für die Polymerisation der nachfolgenden (B/A)-Blöcke ist eine Nachdosierung von K bevorzugt, zunächst auf ein molares Lithium/Kalium-Verhältnis von 33 bis 39, um einen annähernd gleichen Einbau von vinylaromatischem Monomer, bevorzugt Styrol, und Dien, bevorzugt Butadien, zu bewirken und schließlich auf ein molares Lithium/Kalium-Verhältnis von < 33, um einen überwiegenden Einbau des vinylaromatischen Monomers, bevorzugt Styrol, im Verhältnis zu dem Dien, bevorzugt Butadien, zu bewirken.

Die Polymerisationstemperatur beträgt im Allgemeinen 0 bis 130 °C, bevorzugt 30 bis 100 °C und besonders bevorzugt 35 bis 90 °C.

Die Polymerisation wird im Allgemeinen mehrstufig durchgeführt, wobei der Initiator in mehreren Chargen, bevorzugt mittels zweifacher Initiierung, zugegeben wird. Beispielsweise wird mit der Herstellung des Hartblocks A begonnen. Ein Teil der Monomeren wird im Reaktor vorgelegt und die Polymerisation durch Zugabe eines Teils des Initiators gestartet. Um einen definierten, aus der Monomer- und Initiatordosierung berechenbaren Kettenaufbau zu erzielen, ist es empfehlenswert, den Prozess bis zu einem hohen Umsatz (über 99 %) zu führen, bevor die zweite Monomerzugabe erfolgt. Zwingend ist dies jedoch nicht.

Die Abfolge der Monomerzugabe richtet sich nach dem gewählten Blockaufbau. Bevorzugt wird bei einem Batch-Prozess als erstes das gesamte oder ein Teil des Lösungsmittels wie beispielsweise Cyclohexan vorgelegt und dann die Menge an Initiator wie beispielsweise sec-Butyllithium vorgelegt, die für die Einstellung der gewünschten Molmasse gebraucht wird plus einer so genannten Titrationsmenge, die dazu dient, Spuren an Verunreinigungen im Lösungsmittel und im Kessel zu vernichten. Dann wird bevorzugt das Kaliumsalz wie beispielsweise Kalium-tertiäramylat bevorzugt gelöst in Cyclohexan, oder das komplexierende Lösungsmittel wie beispielsweise THF in den Reaktor gegeben und dann die erste Styrolmenge zugegeben, um den ersten Block A herzustellen. Danach werden Dien und Vinylaromat, bevorzugt gleichzeitig, zugegeben. Die Zugabe kann in mehreren Portionen gegebenenfalls zusammen mit weiterem Lösungsmittel geschehen, z. B. zur verbesserten Wärmeabfuhr und in Abhängigkeit von der gewünschten Zusammensetzung. Durch das Mengenverhältnis von Dien zu vinylaromatischer Verbindung, die Konzentration des Kaliumsalzes, falls eines eingesetzt wird, bzw. die Konzentration und chemische Struktur der als Cosolvens eingesetzten Lewis-Base, falls diese eingesetzt wird, sowie die Temperatur wird der statistische Aufbau und die Zusammensetzung des Blocks B/A bestimmt. Erfindungsgemäß nimmt das Dien relativ zur Gesamtmasse einschließlich vinylaromatischer Verbindung einen Gewichtsanteil von 25 bis 70 % ein.

Anschließend kann ein weiterer Block A durch Zugabe des Vinylaromaten anpolymerisiert werden. Bevorzugt erfolgt die zweite Initiierung, d. h. die zweite Zugabe des Initiators, vor der Zugabe des Vinylaromaten zur Anpolymerisation des zweiten Blocks A.

Eine ebenfalls bevorzugte Ausführungsform besteht darin, in einem weiteren, separaten Reaktor mittels des Verfahrens, wie es für den ersten Block A oben beschrieben wurde, eine lebendes Polymer A herzustellen und nach Abschluss der Polymerisation des Blocks B/A und bevorzugt eines weiteren Blocks A im ersten Reaktor beide lebenden Polymere zusammenzuführen, was in einem der beiden Reaktoren oder einem dritten Reaktor erfolgen kann. Bei dieser Ausführungsform können das lebende Polymer A und der zuletzt polymerisierte Block A ungleiche Molmassen aufweisen. Bei zwei- und mehrfacher Initiierung im gleichen Reaktor ist die Molmasse des neu gestarteten Polymeren und des aufpolymerisierten Blocks praktisch identisch.

Nach der letzten Monomerzugabe, bevorzugt der Zugabe des Vinylaromaten, erfolgt in einer weiteren Ausführungsform des erfindungsgemäßen Verfahrens die Kopplung mit einem Kopplungsmittel, wodurch mehrere Polymerblöcke miteinander verbunden werden und das erfindungsgemäße gummiartige Blockcopolymerisat mit einer sternförmigen molekularen Architektur gebildet wird.

Als Kopplungsmittel kann im Allgemeinen jede bi- oder mehrfunktionelle Verbindung eingesetzt werden. Bevorzugt ist das Kopplungsmittel ausgewählt aus epoxidierten Pflanzenölen wie epoxidiertem Leinsamenöl oder epoxidiertem Sojabohnenöl, Silanen wie Alkoxysilanen, z. B. $Si(OMe)_4$, Chlorsilanen wie $SiCl_4$, $Si(Alkyl)_2Cl_2$, $Si(Alkyl)Cl_3$, wobei Alkyl ein $C_1$- bis $C_4$-Alkylrest, bevorzugt Methylrest, ist, Halogeniden von aliphatischen Kohlenwasserstoffen wie Dibrommethan oder Bischlormethylbenzol, Zinntetrachlorid, polyfunktionellen Aldehyden wie Terephthalsäuredialdehyd, polyfunktionellen Ketonen, polyfunktionellen Estern wie Carbonsäureestern, z. B. Essigsäureethylester, Bernsteinsäurediethylester, Adipinsäuredimethyl- oder diethylester, polyfunktionellen Anhydriden und Di- und Oligoepoxiden wie 1,4-Butandiolglycidylether, aktivierten Diolefinen wie Diisopropenylbenzol, Divinylbenzol oder Distyrylbenzol. Besonders bevorzugte Kopplungsmittel sind epoxidierte Pflanzenöle wie epoxidiertes Leinsamenöl oder epoxidiertes Sojaöl und Silane wie Alkoxysilane, z. B. $Si(OMe)_4$. Weitere geeignete Kopplungsmittel sind z. B. in US 3,985,830, US 3,280,084, US 3,637,554 und US 4,091,053 genannt.

Das Kopplungsmittel bildet das Kopplungszentrum Y, das durch Umsetzung der lebenden anionischen Kettenenden mit einem der vorstehend genannten Kopplungsmittel gebildet wird.

Die Menge an Kopplungsmittel berechnet sich nach dessen Funktionalität und der eingesetzten Initiatormenge. Bevorzugt wird soviel Kopplungsmittel zugesetzt, wie für die Umsetzung aller lebenden Ketten, die der aktiven Initiatormenge (Gesamtinitiatormenge minus Titrationsmenge) entspricht, benötigt werden. Bei Estergruppen muss berücksichtigt werden, dass diese zwei lebende Ketten binden, Epoxide, Halogenalkane und -silane dagegen eine pro funktionelle Gruppe. Beispielsweise enthält epoxidiertes Sojabohnenöl als Triglycerid veresterte Fettsäuren mit überwiegend einer und zwei Epoxygruppen und bindet entsprechend vorwiegend drei oder vier Polymerketten unter Freisetzung des Metallalkoholats des Glycerins, da die Carboxygruppe noch zwei weitere Ketten bindet. Generell kann aber auch ein Überschuss an Kopplungsmittel eingesetzt werden, bei epoxidiertem Pflanzenöl bevorzugt ein Überschuss von 10 bis 20 Gew.-%. Überschüsse verringern im Allgemeinen die Zahl der Sternäste, da nicht mehr alle funktionellen Gruppen reagieren können. Dies kann vermieden werden, wenn das Kopplungsmittel so langsam zur lebenden Polymerlösung gegeben wird, dass es beim Zulauf abreagiert. Dann erhält man Sterne mit der maximal möglichen Anzahl an Ästen neben unreagiertem Kopplungsmittel.

Es ist möglich, dass in jedem Initiierungsschritt des erfindungsgemäßen Verfahrens zur Herstellung des erfindungsgemäßen gummielastischen Blockcopolymerisats derselbe Initiator eingesetzt wird. Grundsätzlich ist es jedoch auch möglich, dass verschiedene Initiatoren eingesetzt werden.

Die Konzentration kann in einem weiten Bereich variiert, sollte jedoch bevorzugt so gewählt werden, dass die Temperaturen am Ende der Polymerisation der einzelnen Blöcke Werte von 100 °C nicht und wenn, dann höchstens kurz überschreiten, um signifikante vorzeitige thermische Terminierung zu vermeiden. Typische Polymerkonzentrationen nach der Kopplung sind bei einem Batchverfahren im Rührkessel 10 bis 50 Gew.-%, bevorzugt 20 bis 40 Gew.-% und besonders bevorzugt 25 bis 35 Gew.-%.

Grundsätzlich können statt eines Rührkessels bevorzugt in Kombination mit einem Siedekühler, wobei bevorzugt durch Absenkung des Kessel-Innendrucks durch Sieden und Rückfluss des Lösungsmittels die Reaktionslösung gekühlt wird, auch andere Reaktorformen eingesetzt werden wie etwa ein Kreislaufreaktor in Kombination mit einer gekühlten Strecke wie beispielsweise einem Wärmetauscher, oder ein Rührkessel in Kombination mit einem außen liegenden Wärmetauscher. Statt in einem Batchverfahren können die erfindungsgemäßen gummielastischen Blockcopolymerisate in einem kontinuierlichen Verfahren durch beispielsweise die serielle Anordnung der oben aufgeführten Reaktoren in unterschiedlichen Kombinationen oder in einem Rohrreaktor mit bevorzugt statischen Mischelementen oder eine Kombination von Rohrreaktor und den oben aufgeführten Reaktoren hergestellt werden. Die Zahl der Reaktionszonen ist bevorzugt gleich groß wie die Zahl der unterschiedlichen Monomerdosierungen plus der Dosierung des Kopplungsmittels. Zu Beginn und an den passenden Stellen wird zusätzlich das Initiatorsystem umfassend im Allgemeinen Initiator und Randomizer und optional weiteres Lösungsmittel gemischt, wobei das Lösungsmittel bevorzugt in die Monomerzuläufe gegeben wird, so dass das Monomer bereits verdünnt ist, wenn es den Reaktor erreicht. Eine bevorzugte Ausführungsform besteht darin, die Polymerkonzentration entlang der Reaktorkaskade in einem Bereich von 15 bis 35 Gew.-% konstant zu halten. Eine weitere bevorzugte Ausführungsform besteht darin, die Polymerkonzentration durch die letzte Monomerdosierung auf 36 bis 50 Gew.-% zu erhöhen.

Die vorliegende Erfindung zeichnet sich somit dadurch aus, dass sie

> a) eine mehrfache Initiierung, bevorzugt eine zweifache Initiierung umfasst,
> b) bevorzugt einen Kopplungsschritt, besonders bevorzugt einen Kopplungsschritt nach einer zweiten Styrolpolymerisation umfasst, und
> c) in einer bevorzugten Ausführungsform die zweite Initiierung vor einer zweiten Styrolpolymerisation erfolgt.

In dem erfindungsgemäßen Verfahren spielt auch das molare Verhältnis der ersten und der zweiten Initiierung eine Rolle im Hinblick auf die Struktur des erfindungsgemäßen gummielastischen Blockcopolymerisats (Initiierungsverhältnis). Bei einem Stern mit z. B. vier Ästen ist ein Verhältnis von 1 : 1 bevorzugt, wobei im Mittel zwei A1-B/A-A2-Äste und zwei A-Polymere gebunden sind (pseudolineare Architektur), wenn die letzte Monomerzugabe nach der zweiten Initiierung die Zugabe eines vinylaromatischen Monomers ist.

Bevorzugt ist auch, dass A1 größer ist als A2, aber A2 lang genug ist, dass Phasentrennung eintritt, das heißt, dass die A2-Blöcke zumindest teilweise in einer eigenen A-Phase vorliegen und nicht in die B/A-Phase homogen eingemischt sind, wie bereits vorstehend ausgeführt.

Eine Besonderheit der Struktur des gummielastischen Blockcopolymerisats gemäß einer besonders bevorzugten Ausführungsform besteht in den folgenden Punkten:

- auch die ungekoppelten A1-B/A-A2-Blockcopolymere sind nicht nur formal Hart-Weich-Hart-Dreiblöcke, sondern verhalten sich auch so und tragen zur Festigkeit bei;
- Dimere, die kein Y-Segment aufweisen, und Sterne mit der Blocksequenz $(A1-B/A-A2-)_2(A2-)Y$ haben Hart-Weich-Hart-Weich-Hart-Pentablockcharakter und weisen eine höhere mechanische Festigkeit auf als Triblöcke und sind deshalb besonders bevorzugt;
- Sterne mit der Blocksequenz $(A1-B/A-A2-)_3(A2-)nY$ mit (n = 1, 2, 3, ...7) und $(A1-B/A-A2-)_4(A2-)nY$ mit (n = 1, 2, 3, ...6) weisen ebenfalls Pentablockcharakter auf;
- Sterne mit der Blocksequenz $(A1-B/A-A2-)_1(A2-)_n$ mit (n = 1, 2, 3, ...9) erreichen in vollem Umfang die Festigkeit von A-B/A-A-Dreiblöcken;
- Anteile von Sternen $(A2-)_n$ (n = 1, 2, 3, ...9) wirken als Schmiermittel, schaden aber der Festigkeit nicht und verschlechtern auch nicht das Hystereseverhalten.

Das Initiierungsverhältnis beträgt - bei einer zweifachen Initiierung - im Allgemeinen 10:1 bis 1:10, bevorzugt 4:1 bis 1:4, besonders bevorzugt 2:1 bis 1:2 und ganz besonders bevorzugt 1,5:1 bis 1:1,5.

Die weitere Aufarbeitung des erfindungsgemäßen gummielastischen Blockcopolymerisats erfolgt nach üblichen Verfahren. Es empfiehlt sich, dabei in einem Rührkessel zu arbeiten, nach der Kopplung gegebenenfalls mit einer kleinen Menge Alkohol wie Isopropanol die möglicherweise in kleinen Mengen übrig gebliebenen Carbanionen und die gegebenenfalls im Kopplungsschritt entstandenen, polymergebundenen Alkoholate zu protonieren, um Belagsbildung im Kessel und Verfärbungen des Produktes zu vermeiden und die Lösungsviskosität abzusenken, vor der weiteren Aufarbeitung in üblicher Weise mit $CO_2$/Wasser schwach sauer zu stellen, um später ein glasklares Produkt ohne Farbstich zu erhalten, das Polymer mit einem oder bevorzugt einer Kombination von Radikalfängern (z.B. C-Radikalfänger wie $\alpha$-Tocopherol (Vitamin E), Sumilizer® GM und Sumilizer® GS, in Kombination mit O-Radikalfängern wie Irganox® 1010, Irganox® 1076) und einem sekundären Oxidationsinhibitor (z.B. handelsübliche Produkte bevorzugt auf Phosphitbasis wie Triisononylphenylphosphit (TNPP) oder Irgafos® 168) zu stabilisieren, das Lösungsmittel nach den üblichen Verfahren zu entfernen, zu extrudieren und zu granulieren. Ein bevorzugtes Verfahren zur Entfernung des Lösungsmittels ist die stufenweise Abreicherung des Lösungsmittels, wobei die Lösung, falls die Polymerisation nach einem Batchverfahren erfolgt, vorteilhaft zunächst in einem Puffertank zwischengelagert, dann bevorzugt nach Passieren einer Pumpe über einen oder mehrere serielle Wärmetauscher auf eine Temperatur erhitzt wird, die vorzugsweise 100 bis 140°C über dem Siedepunkt des Lösungsmittels liegt (bei Cyclohexan sind dies 180 bis 220 °C), um dann nach Passieren eines Druckhalteventils durch ein kurzes Rohr mit Dampfgeschwindigkeiten von bevorzugt 100 bis 350 m/s in einen Entspannungstopf überführt zu werden, dessen Druck und Temperatur bevorzugt so eingestellt wird, dass das Lösungsmittel gerade zu kondensieren beginnt und die Oberfläche mit einem Lösungsmittelfilm überzogen, also nicht trocken ist, wobei für Cyclohexan als Lösungsmittel bevorzugt Temperaturen von 100 bis 140 °C und Drücke von 1,6 bis 4,3 bar gewählt werden. Der Lösungsmitteldampf wird aus dem Entspannungstopf als Brüden bevorzugt nach oben abgeführt, kondensiert und der Aufarbeitung zugeführt, während die nunmehr ca. 70 bis 95%ige Polymerlösung in Form von Flocken auf den Boden des Gefäßes fällt und von dort beispielsweise mit einer Zahnradpumpe in den nächsten Wärmetauscher weiterbefördert und erneut bevorzugt auf 170 bis 230 °C erhitzt werden kann. Die Lösung wird dann erneut über ein Druckhalteventil auf die Schnecken eines bevorzugt Doppelschneckenextruders entspannt, wobei der Lösungsmitteldampf über Entgasungsdome vor und hinter der Polymerzuführung abgeführt wird. Bevorzugt wird dann in mit sperrenden Schneckenelementen gegeneinander abgedichteten Segmenten des Extruders bei zunehmend besserem Vakuum, das vor dem Extruderkopf bevorzugt bei 1 bis 30 mbar liegt, und bevorzugt unter Einspritzung von kleinen Mengen Wasser das Lösungsmittel weiter abgereichert, bis ein Lösungsmittelgehalt von bevorzugt <3000 ppm, besonders bevorzugt <2000 ppm erreicht wird. Am Ende des Extruders kann die Schmelze entweder strang- oder unterwassergranuliert werden, wobei die Unterwassergranulierung bevorzugt ist. Die Lösungsmittelentfernung kann aber auch über andere Verfahren erfolgen wie über einen so genannten Filmtruder in Kombination ggf. mit einem Extruder oder durch Wasserdampfstrippen, wie es bei den meisten styrolbasierten thermoplastischen Elastomeren üblich ist. In diesem Fall erhält man Polymerflocken. Das Granulat bzw. die Flocken können wie andere Kautschuk- und Gummisorten mit einem Antiblockmittel wie Acrawax®, Besquare®, Aerosil® und/oder Tricalciumphosphat gegen Verkleben geschützt werden.

Ebenfalls bevorzugt kann die Polymerlösung nach der Kopplung statt additiviert und vom Lösungsmittel befreit zuerst einer Hydrierung unterworfen und dann weiter aufgearbeitet werden. Bevorzugt werden hierfür erfindungsgemäße Blockpolymerisate mit einem Anteil an 1,2-Verknüpfungen der Butadieneinheiten von 30 bis 80 %, besonders bevorzugt 35 bis 50 %, verwendet, die wie oben beschrieben durch den Zusatz von koordinierenden Lösungsmitteln wie THF gewonnen werden können. Ebenfalls für die nachfolgende Hydrierung bevorzugt sind erfindungsgemäße Blockpolymerisate mit Isopreneinheiten. Die Lösung mit den erfindungsgemäßen Blockpolymeren wird bevorzugt in einen dafür mit einem Begasungsrührer oder einem anderen schnelllaufenden und auch vertikal durchmischenden Rührer ausgerüsteten Hydrierreaktor überführt, ein Hydrierkatalysator zugesetzt und unter Einpressen von Wasserstoffgas hydriert, bis bevorzugt >90 %, besonders bevorzugt >98 %, ganz besonders bevorzugt >99 % der ursprünglich vorhandenen olefinischen Doppelbindungen umgesetzt sind. Geeignete Hydrierkatalysatoren sind zum Beispiel Nickel, Palladium und Platin als Metall, Pulver, Metallschwamm, geträgert zum Beispiel auf Aktivkohle, Raneynickel, als Kolloid beispielsweise durch Reduktion von Nickelsalzen mit beispielsweise Aluminiumalkylen, Titan-, Zirkonium- und Hafniumkomplexe und andere hydridbildende Metalle und Metallkomplexe. Der Wasserstoffdruck kann von 0,1 bis 1000 bar, bevorzugt von 1 bis 200, besonders bevorzugt von 10 bis 200 bar gewählt werden. Geeignete Hydriertemperaturen sind 20 bis 300 °C, bevorzugt 50 bis 200 °C, besonders bevorzugt 80 bis 150°C. Die Hydrierung wird bevorzugt adiabatisch ausgehend von der Polymerisationsendtemperatur (die Kopplungsreaktion verändert die Temperatur praktisch nicht) durchgeführt, die bevorzugt zwischen 80 und 105 °C beträgt. Nach der Hydrierung wird der Katalysator beispielsweise durch eine Kombination aus Oxidation und Waschen der Polymerlösung mit Wasser abgetrennt, wobei die Oxidation mit einem Peroxid wie Wasserstoffperoxid bevorzugt in Kombination mit einer Säure wie beispielsweise Ameisensäure, Essigsäure oder Phosphorsäure durchgeführt werden kann. Eine weitere Möglichkeit der Abtrennung besteht in der Adsorption an einem geeigneten Trägermaterial, das anorganisch wie Silicagel oder ein organisches Ionenaustauscherharz sein kann. Bei Heterogenkatalyse kann die Abtrennung über eine Filtration erfolgen, bevorzugt über eine Tiefenfiltration mit einer Lage Kieselgur. Die bevorzugt geträgerten Edelmetallkatalysatoren können gegebenenfalls für den nächsten Hydrieransatz wiederverwendet werden. Ein weiterhin bevorzugtes Hydrierverfahren besteht darin, die Polymerlösung zusammen mit Wasserstoff über ein festes Katalysatorbett zu leiten, wobei de Festbettkatalysator sich bevorzugt in einem senkrecht stehenden Rohr befindet, die Lösung von oben nach unten geleitet und der Wasserstoff von unten nach oben im Gegenstrom eingespeist wird.

Weitere geeignete Hydrierverfahren sind beispielsweise in WO 98/12240 A1 genannt.

Ein weiterer Gegenstand der vorliegenden Anmeldung ist daher eine thermoplastische elastomere Formmasse erhältlich durch Hydrierung des erfindungsgemäßen gummielastischen Blockcopolymerisats.

Das erfindungsgemäße Verfahren zeichnet sich insbesondere dadurch aus, dass das erfindungsgemäße gummielastische Blockcopolymerisat in guten Raum-Zeit-Ausbeuten hergestellt werden kann. Im allgemeinen beträgt die Raum-Zeit-Ausbeute (RZA) für die Polymerisation in einem Batch-Verfahren, das heißt von dem Zeitpunkt, an dem die erste Monomercharge mit der ersten Initiatorcharge vereint ist, bis zum Abschluss der Kopplungsreaktion, also dem Zeitpunkt, an dem man ggf. Alkohol dosieren und mit der Entleerung des Reaktors beginnen kann, 0,5 h bis 5 h, bevorzugt 1 bis 3 h, besonders bevorzugt 1 h bis 2 h.

Die erfindungsgemäßen Blockcopolymerisate besitzen ein dem Weich-PVC sehr ähnliches Eigenschaftsspektrum, können jedoch vollkommen frei von migrationsfähigen niedermolekularen Weichmachern hergestellt werden. Sie sind unter den üblichen Verarbeitungsbedingungen (180 bis 250 °C) gegen Vernetzung stabil. Die hervorragende Stabilität der erfindungsgemäßen Polymerisate gegen Vernetzung kann mittels Rheografie eindeutig belegt werden. Die Versuchsanordnung entspricht derjenigen der MVR-Messung. Bei konstanter Schmelzflussrate wird der Druckanstieg in Abhängigkeit von der Zeit aufgezeichnet. Die erfindungsgemäßen Polymeren zeigen selbst nach 20 Minuten bei 250 °C keinen Druckanstieg und ergeben einen glatten Schmelzestrang.

Die erfindungsgemäßen Blockcopolymerisate zeichnen sich ferner durch eine hohe Sauerstoffpermeation $P_o$ und Wasserdampfpermeation $P_w$ von über 2000 [$cm^3 \cdot 100$ mm/$m^2 \cdot d \cdot$ bar] bzw. über 10 [g 100 mm/$m^2 \cdot d \cdot$ bar] aus, wobei $P_o$ die Sauerstoffmenge in $cm^3$ bzw. $P_w$ wie Wasserdampfmenge in Gramm angibt, die durch ein $m^2$ Folie mit einer Normdicke von 100 mm je Tag und je bar Partialdruckdifferenz hindurchtreten. Eine hohe Rückstellkraft bei Deformation so wie man sie bei thermoplastischen Elastomeren beobachtet, eine hohe Transparenz (über 90 % bei 10 mm Schichtdicke), eine niedrige Verschweißtemperatur von unter 100 °C und ein breiter Schweißbereich (über 5 °C) bei einer moderaten Klebrigkeit machen die erfindungsgemäßen gummielastischen Blockcopolymere zu einem geeigneten Ausgangsmaterial für die Herstellung von so genannten Dehn- oder Stretchfolien, Infusionsschläuchen und anderen extrudierten, spritzgegossenen, thermogeformten oder blasgeformten Fertigteilen, für die hohe Transparenz und Zähigkeit verlangt werden, insbesondere für Anwendungen im Bereich der Medizintechnik.

Ein weiterer Gegenstand der vorliegenden Erfindung ist daher die Verwendung der gummielastischen Blockcopolymere gemäß der vorliegenden Erfindung zur Herstellung von Formteilen wie Folien, Schäumen, Thermoformlingen, Spritzgußformlingen; von Schläuchen oder Profilextrudaten; als Klebeschicht in Mehrschichtfolien; als Versiegelung; als Haftvermittler oder thermoplastische Komponente in Wood-Plastic-Composits; als Schmelzkleberkomponente; zur Schlagzähmodifizierung von Thermoplasten oder Elastomeren oder zur Verträglichkeitsvermittlung von sonst unverträglichen Polymermischungen, die sich makroskopisch entmischen.

Eine wichtige Anwendung der erfindungsgemäßen Blockcopolymerisate sind diverse Folienanwendungen wie Dehn- und Clingfolien, Folien für Schrumpfhauben, als Klebeschicht in Mehrschichtfolien für beispielsweise controlled atmosphere packaging oder für (wiederverschließbare) Versiegelung, des Weiteren Extrusionsanwendungen wie Schläuche, beispielsweise für Infusionsbestecke und andere medizinische Anwendungen, sowie Profilextrusionen etwa im Bausektor, hochgefüllt als Bodenbelag.

Des Weiteren können die erfindungsgemäßen thermoplastischen Blockcopolymerisate als Haftvermittler oder thermoplastische Komponente in Wood-Plastic-Composits (WPCs) etwa in Kombination mit Polypropylen eingesetzt werden. Des Weiteren eignen sich die erfindungsgemäßen Blockcopolymerisate als Zähmodifikator in Thermoplasten wie GPPS, HIPS, ABS, Polyolefinen wie Polyethylen und Polypropylen oder Gemischen davon und als Blendkomponente in thermoplastischen Elastomeren wie TPUs (zur Verbilligung), SBS, SIS, SEBS und SEPS (die vorstehend genannten Buchstaben bzw. Buchstabenkombinationen weisen die folgenden Bedeutungen auf: B Polybutadien, I Polyisopren, EB Poly(ethylen-butylen) = hydriertes Polybutadien mit erhöhtem 1,2-Anteil, EP Poly(ethylen-propylen) = hydriertes Polyisopren) sowie thermoplastischen Vulkanisaten auf EPDM/PP-Basis (Verträglichkeitsvermittler zu besonders Styrolpolymerisaten vor allem in Zweikomponentenspritzguss). Weiter besonders geeignet sind die erfindungsgemäßen gummielastischen Blockcopolymerisate als Zähkomponente in elastischem Polystyrolschaum.

Des Weiteren sind die erfindungsgemäßen gummielastischen Blockcopolymerisate sehr gut für Spritzgussanwendungen geeignet, z. B. im Spielzeugsektor (Puppen, Figuren usw., hier ist die lebensmittelrechtliche Zulassung der Polymere wichtig), für Hart-Weich-Verbindungen (hier kommt die gute Haftung der erfindungsgemäßen gummielastischen Blockcopolymerisate auf einer Vielzahl von Polymeren zum Tragen) und für Soft-Touch- und Anti-Rutsch-Anwendungen, vor allem von plastifiziertem gummielastischem Blockcopolymerisat.

Als Pulver kann das erfindungsgemäße gummielastische Blockcopolymerisat im Rotationsschleuderguss z. B. für Puppenköpfe verwendet werden.

Weitere Verwendungsmöglichkeiten sind der Einsatz als Schmelzkleberkomponente, insbesondere zusammen mit Harzen, und Füllstoffe, sowie für die Asphaltmodifikation.

In einer bevorzugten Ausführungsform kann das erfindungsgemäße gummielastische Blockcopolymerisat als Behältnis, etwa als Schlauch, für das klebrige Bitumen verwendet werden, um den Transport in der Kette zu vereinfachen, und dann das Bitumen mit dem gummielastischen Blockcopolymerisat gemeinsam aufgeschmolzen und homogenisiert werden, wo es dann die Eigenschaften des Straßenbelags verbessert.

Ein weiterer Gegenstand der vorliegenden Erfindung sind Folien, Schäume, Thermoformlinge, Spritzgussformlinge, Schläuche oder Profilextrudate aufgebaut aus mindestens einem gummielastischen Blockcopolymerisat gemäß der vorliegenden Erfindung.

Ist die Anwendung mit längerer Bewitterung oder thermischer Belastung verbunden, ist das erfindungsgemäße gummielastische Blockcopolymerisat in seiner hydrierten Form bevorzugt. Beispielsweise gilt dies für Anwendungen in Kraftfahrzeugen, für Spielzeug und Sportgeräte für den Außenbereich, in Frei- und Hallenbädern, im hochwertigen Sanitär- und Wellnessbereich, für Dehnhaubenanwendungen, bei denen die zu schützende Ware in Freien gelagert wird, für den Außenbereich im Bausektor, zur Herstellung von witterungsbeständigen Schmelz- und Haftklebern, zur Zähigkeitsverbesserung von witterungsbeständigen Thermoplasten wie Styrol-Acrylnitril-Copolymeren oder Polymerisaten auf (Meth)acrylatbasis.

**Patentansprüche**

1. Gummielastisches Blockcopolymerisat mit einer sternförmigen molekularen Architektur, wobei die sternförmige molekulare Architektur mindestens zwei unterschiedliche Sternäste aufweist, wobei mindestens ein Sternast aufgebaut ist aus mindestens einem einpolymerisierte Einheiten mindestens eines vinylaromatischen Monomeren aufweisenden, eine Hartphase bildenden Block A und gegebenenfalls mindestens einem ein oder mehrere verschiedene Dienmonomere aufweisenden, eine erste gummielastische (Weich-)Phase bildenden Block B und mindestens einem einpolymerisierte Einheiten sowohl mindestens eines vinylaromatischen Monomeren wie mindestens eines Diens aufweisenden elastomeren, eine Weichphase bildenden Block B/A, wobei die Glasübergangstemperatur $T_g$ des Blocks B/A unter 0 °C liegt und der Anteil der Hartphase an dem gesamten Blockcopolymerisat 1 bis 40 Gew.-% beträgt und der Gesamtgewichtsanteil der auf dem mindestens einen vinylaromatischen Monomeren basierenden Einheiten mindestens 40 Gew.-% beträgt.

2. Gummielastisches Blockcopolymerisat nach Anspruch 1, **dadurch gekennzeichnet, dass** das Blockcopolymerisat 2 bis 10, bevorzugt 3 bis 6, besonders bevorzugt 3 oder 4 Sternäste aufweist.

3. Gummielastisches Blockcopolymerisat nach Anspruch 1 oder 2, **dadurch gekennzeichnet, dass** das vinylaromatische Monomer ausgewählt ist aus Styrol und dessen in $\alpha$-Stellung oder am aromatischen Ring mit Alkylresten mit 1 bis 4 Kohlenstoffatomen substituierten Derivaten und Mischungen davon, sowie in Kombination mit 1,1-Diphenylethylen, bevorzugt Styrol, $\alpha$-Methylstyrol, p-Methylstyrol, Ethylstyrol, tert.-Butylstyrol, Vinyltoluol, 1,1-Diphenylethylen und Mischungen davon, besonders bevorzugt Styrol.

4. Gummielastisches Blockcopolymerisat nach einem der Ansprüche 1 bis 3, **dadurch gekennzeichnet, dass** das Dien ein Dien mit konjugierten Doppelbindungen ist, bevorzugt ausgewählt aus 1,3-Butadien, Isopren, 2,3-Dimethylbutadien, 1,3-Pentadien, 1,3-Hexadien, Phenylbutadien, Piperylen und Mischungen davon, besonders bevorzugt 1,3-Butadien und Isopren und Mischungen davon.

5. Gummielastisches Blockcopolymerisat nach einem der Ansprüche 1 bis 4, **dadurch gekennzeichnet,**

**dass** der mindestens eine, eine Hartphase bildende Block A aus Styrolmonomeren aufgebaut ist, der mindestens eine gegebenenfalls vorliegende, eine gummielastische (Weich)Phase bildende Block B aus 1,3-Butadienmonomeren und/oder Isoprenmonomeren aufgebaut ist und der mindestens eine, eine Weichphase bildende Block B/A aus Styrolmonomeren als vinylaromatischen Monomeren und 1,3-Butadienmonomeren und/oder Isoprenmonomeren als Dienmonomeren aufgebaut ist.

6. Gummielastisches Blockcopolymerisat nach einem der Ansprüche 1 bis 5, **dadurch gekennzeichnet, dass** zwei Blöcke A in mindestens einem Sternast vorliegen, bevorzugt mit unterschiedlichen Molmassen, besonders bevorzugt hat der in dem mindestens einen Sternast außen liegende Block eine größere Molmasse als der innen liegende Block.

7. Gummielastisches Blockcopolymerisat nach einem der Ansprüche 1 bis 6, **dadurch gekennzeichnet, dass** die Weichphase B/A aus 2 oder mehr verschiedenen Blöcken B/A gebildet wird, wobei sich die Blöcke B/A in ihren Molekulargewichten und/oder in ihren Vinylaromat/Dien-Verhältnissen unterscheiden.

8. Gummielastisches Blockcopolymerisat nach einem der Ansprüche 1 bis 6, **dadurch gekennzeichnet, dass** innerhalb des Blocks B/A p sich wiederholende Abschnitte (Teilblöcke) mit wechselndem Monomeraufbau vorhanden sind, wie sie durch p-portionsweise Zugaben der Monomeren gebildet werden, wobei p 2 bis 10 bedeutet, oder eine Änderung des Monomerenverhältnisses B/A in Form eines Gradienten erfolgt, bis hin zu der ausschließlichen Zugabe des Monomers B.

9. Gummielastisches Blockcopolymerisat nach Anspruch 8, **dadurch gekennzeichnet, dass** sich die Zusammensetzung innerhalb des Blocks B/A derart ändert, dass keine definierten Teilblöcke gebildet werden, sondern dass ein Zusammensetzungsgradient vorkommt, wobei bevorzugt $(B/A)_{p1} > (B/A)_{p2} < (B/A)_{p3}$ ist, wobei die Teilabschnitte $(B/A)_{p1}$ und/oder $(B/A)_{p3}$ in einer Ausführungsform durch $B_{p1}$ und $B_{p3}$ ersetzt sein können.

10. Gummielastisches Blockcopolymerisat nach einem der Ansprüche 1 bis 9, **dadurch gekennzeichnet, dass** das Blockcopolymerisat eine der folgenden allgemeinen Formeln aufweist:

$$Y[(B/A\text{-}A)_n]_m[A]_l$$

$$Y[(A-B/A)_n-A]_m[A]_l$$

wobei A für einen vinylaromatischen Block und B/A für einen einpolymerisierte Einheiten sowohl mindestens eines vinylaromatischen Monomeren wie mindestens eines Diens aufweisenden elastomeren Block steht, der wiederum selbst in elastomere Blöcke mit unterschiedlichem Dien/Vinylaromat-Verhältnis aufgeteilt sein oder einen Gradienten aufweisen kann, Y der Rest eines (m + l) - funktionellen Kopplungsmittels ist, und m und l unabhängig voneinander 1 bis 10, bevorzugt 1, 2, 3 oder 4, besonders bevorzugt 1 oder 2 bedeuten, wobei die Summe (m + l) der Funktionalität des Kopplungsmittels entspricht, und n 1 bis 10, bevorzugt 1, 2 oder 3, besonders bevorzugt 1 bedeutet.

11. Gummielastisches Blockcopolymerisat nach Anspruch 10, **dadurch gekennzeichnet, dass** m 2 bedeutet.

12. Gummielastisches Blockcopolymerisat nach Anspruch 10 oder 11, **dadurch gekennzeichnet, dass** n 1 bedeutet.

13. Verfahren zur Herstellung eines gummielastischen Blockcopolymerisats nach einem der Ansprüche 1 bis 12 durch anionische Polymerisation mittels mindestens eines Initiators und unter Zugabe mindestens eines Kopplungsmittels, **dadurch gekennzeichnet, dass** ein Teil des mindestens einen Initiators zu Beginn der Polymerisation zugegeben wird und der restliche Teil des Initiators zu einem oder mehreren späteren Zeitpunkt(en) zugegeben wird.

14. Verfahren nach Anspruch 13, **dadurch gekennzeichnet, dass** das Kopplungsmittel eine bi- oder mehrfunktionelle Verbindung ist, bevorzugt ausgewählt aus epoxidierten Pflanzenölen wie epoxidiertem Leinsamenöl oder epoxidiertem Sojabohnenöl, Silanen wie Alkoxysilanen, z. B. $Si(OMe)_4$, Chlorsilanen wie $SiCl_4$, $Si(Alkyl)_2Cl_2$, $Si(alkyl)Cl_3$, wobei Alkyl ein $C_1$- bis $C_4$-Alkylrest, bevorzugt Methyl, ist, Halogeniden von aliphatischen Kohlenwasserstoffen wie Dibrommethan oder Bischlormethylbenzol, Zinntetrachlorid, polyfunktionellen Aldehyden wie Terephthalsäuredialdehyd, polyfunktionellen Ketonen, polyfunktionellen Estern wie Carbonsäureestern, z. B. Essigsäureethylester, Bernsteinsäurediethylester, Adipinsäuredimethyl- oder diethylester, polyfunktionellen Anhydriden und Di- und Oligoepoxiden wie 1,4-Butandiolglycidylether, aktivierten Diolefinen wie Diisopropenylbenzol, Divinylbenzol oder Distyrylbenzol; bevorzugte Kopplungsmittel sind epoxidierte Pflanzenöle wie epoxidiertes Leinsamenöl oder epoxidiertes Sojaöl und Silane wie Alkoxysilane, z. B. $Si(OMe)_4$.

15. Thermoplastische elastomere Formmasse erhältlich durch Hydrierung des erfindungsgemäßen gummielastischen Blockcopolymerisats.

16. Mischung enthaltend mindestens ein gummielastisches Blockcopolymerisat nach einem der Ansprüche 1 bis 12

    (i) mit mindestens einem weiteren gummielastischen Blockcopolymerisat nach einem der Ansprüche 1 bis 12, und/oder
    (ii) mit mindestens einem Blockcopolymerisat aufgebaut ist aus mindestens einem einpolymerisierte Einheiten mindestens eines vinylaromatischen Monomeren aufweisenden, eine Hartphase bildenden Block A und gegebenenfalls mindestens einem ein oder mehrere verschiedene Dienmonomere aufweisenden, eine erste gummielastische (Weich-)Phase bildenden Block B und mindestens einem einpolymerisierte Einheiten sowohl mindestens einen vinylaromatischen Monomeren wie mindestens eines Diens aufweisenden elastomeren, eine Weichphase bildenden Block B/A, wobei die Glasübergangstemperatur $T_g$ des Blocks B/A unter 0 °C liegt und der Anteil der Hartphase an dem gesamten Blockcopolymerisat 1 bis 40 Gew.-% beträgt und der Gesamtgewichtsanteil der auf dem mindestens einen vinylaromatischen Monomeren basierenden Einheiten mindestens 40 Gew.-% beträgt.

17. Verwendung von gummielastischen Blockcopolymeren gemäß einem der Ansprüche 1 bis 12 oder einer thermoelastischen elastomeren Formmasse nach Anspruch 15 oder einer Mischung nach Anspruch 16 zur Herstellung von Formteilen wie Folien, Schäumen, Thermoformlingen, Spritzgußformlingen; von Schläuchen oder Profilextrudaten; als Klebeschicht in Mehrschichtfolien; als Versiegelung; als Haftvermittler oder thermoplastische Komponente in Wood-Plastic-Composits; als Schmelzkleberkomponente; zur Schlagzähmodifzierung von Thermoplasten oder Elastomeren oder zur Verträglichkeitsvermittlung in von sonst unverträglichen Polymermischungen.

18. Folien, Schäume, Thermoformlinge, Spritzgussformlinge, Schläuche oder Profilextrudate aufgebaut aus mindestens einem gummielastischen Blockcopolymerisat gemäß einem der Ansprüche 1 bis 12 und/oder mindestens einer thermoelastischen elastomeren Formmasse nach Anspruch 15 und/oder einer Mischung nach Anspruch 16.

## Claims

1. Elastomeric block copolymer having star-shaped molecular architecture, where the star-shaped molecular architecture has at least two different arms of the star, where at least one arm of the star is composed of at least one block A which forms a hard phase and which comprises copolymerized units of at least one vinylaromatic monomer, and optionally of at least one block B which forms a first elastomeric (soft) phase and which comprises a, or a plurality of various, diene monomer(s), and of at least one elastomeric block B/A which forms a soft phase and which comprises copolymerized units not only of at least one vinylaromatic monomer but also of at least one diene, where the glass transition temperature Tg of the block B/A is below 0°C, and the proportion of the hard phase, based on the entire block copolymer, is from 1 to 40% by weight, and the total proportion by weight of the units based on the at least one vinylaromatic monomer is at least 40% by weight.

2. Elastomeric block copolymer according to Claim 1, **characterized in that** the block copolymer has from 2 to 10 arms of the star, preferably from 3 to 6, particularly preferably 3 or 4.

3. Elastomeric block copolymer according to Claim 1 or 2, **characterized in that** the vinylaromatic monomer has been selected from styrene and derivatives thereof substituted, in $\alpha$-position or on the aromatic ring, with alkyl moieties having from 1 to 4 carbon atoms, and mixtures of said derivatives, inclusive of a combination with 1,1-diphenylethylene, preferably styrene, $\alpha$-methylstyrene, p-methylstyrene, ethylstyrene, tert-butylstyrene, vinyltoluene, 1,1-diphenylethylene, and mixtures thereof, particularly preferably styrene.

4. Elastomeric block copolymer according to any of Claims 1 to 3, **characterized in that** the diene is a diene having conjugated double bonds, preferably selected from 1,3-butadiene, isoprene, 2,3-dimethylbutadiene, 1,3-pentadiene, 1,3-hexadiene, phenylbutadiene, piperylene, and mixtures thereof, particularly preferably 1,3-butadiene and isoprene and mixtures thereof.

5. Elastomeric block copolymer according to any of Claims 1 to 4, **characterized in that** the at least one block A which forms a hard phase is composed of styrene monomers, the at least one optionally present block B which forms an elastomeric (soft) phase is composed of 1,3-butadiene monomers and/or of isoprene monomers, and the at least one block B/A which forms a soft phase is composed of styrene monomers as vinylaromatic monomers and of 1,3-butadiene monomers and/or isoprene monomers as diene monomers.

6. Elastomeric block copolymer according to any of Claims 1 to 5, **characterized in that** two blocks A are present, preferably with different molar masses, in at least one arm of the star, and with particular preference the external block in the at least one arm of the star has greater molar mass than the internal block.

7. Elastomeric block copolymer according to any of Claims 1 to 6, **characterized in that** the soft phase B/A is formed from 2 or more different blocks B/A, where the blocks B/A differ in their molar mass and/or in their vinylaromatic/diene ratios.

8. Elastomeric block copolymer according to any of Claims 1 to 6, **characterized in that** there are, within the block B/A, p repeating sections (subblocks) with changing monomer structure, formed via addition of the monomers in p portions, where p is from 2 to 10, or the monomer ratio B/A changes in the manner of a gradient, extending as far as exclusive addition of the monomer B.

9. Elastomeric block copolymer according to Claim 8, **characterized in that** the constitution within the block B/A changes in such a way that no defined subblocks are formed, but instead a constitution gradient arises, where preferably $(B/A)_{p1} > (B/A)_{p2} < (B/A)_{p3}$, where, in one embodiment, the subsections $(B/A)_{p1}$ and/or $(B/A)_{p3}$ can have been replaced by $B_{p1}$ and $B_{p3}$.

10. Elastomeric block copolymer according to any of Claims 1 to 9, **characterized in that** the block copolymer has one of the following general formulae:

$$Y[(B/A-A)_n]_m[A]_l$$

$$Y[(A-B/A)_n-A]_m[A]_l$$

where A is a vinylaromatic block and B/A is an elastomeric block which comprises copolymerized units not only of at least one vinylaromatic monomer but also of at least one diene, and which itself in turn can have been divided into
elastomeric blocks with different diene/vinylaromatic ratio or can have a gradient, Y is the moiety of an (m + 1)-functional coupling agent, and m and l are mutually independently from 1 to 10, preferably 1, 2, 3, or 4, particularly preferably 1 or 2, where the sum (m + 1) corresponds to the functionality of the coupling agent, and n is from 1 to 10, preferably 1, 2, or 3, particularly preferably 1.

11. Elastomeric block copolymer according to Claim 10, **characterized in that** m is 2.

12. Elastomeric block copolymer according to Claim 10 or 11, **characterized in that** n is 1.

13. Process for producing an elastomeric block copolymer according to any of Claims 1 to 12 via anionic polymerization by means of at least one initiator and with addition of at least one coupling agent, **characterized in that** a portion of the at least one initiator is added at the start of the polymerization reaction and the remaining portion of the initiator is added at one or more subsequent junctures.

14. Process according to Claim 13, **characterized in that** the coupling agent is a bi- or polyfunctional compound, preferably selected from epoxidized vegetable oils, such as epoxidized linseed oil or epoxidized soybean oil, silanes, such as alkoxysilanes, e.g. $Si(OMe)_4$, chlorosilanes, such as $SiCl_4$, $Si(Alkyl)_2Cl_2$, $Si(alkyl)Cl_3$, where alkyl is a $C_1$-$C_4$-alkyl moiety, preferably methyl, halides of aliphatic hydrocarbons, such as dibromomethane or bischloromethylbenzene, tin tetrachloride, polyfunctional aldehydes, such as terephthaldehyde, polyfunctional ketones, polyfunctional esters, such as carboxylic esters, e.g. ethyl acetate, diethyl succinate, dimethyl or diethyl adipate, polyfunctional anhydrides, and di- and oligoepoxides, such as 1,4-butanediol glycidyl ether, activated diolefins, such as diisopropenylbenzene, divinylbenzene, or distyrylbenzene; preferred coupling agents are epoxidized vegetable oils, such as epoxidized linseed oil or epoxidized soy oil, and silanes, such as alkoxysilanes, e.g. $Si(OMe)_4$.

15. Thermoplastic elastomeric molding composition obtainable via hydrogenation of the elastomeric block copolymer of the invention.

16. Mixture comprising at least one elastomeric block copolymer according to any of Claims 1 to 12

   (i) with at least one further elastomeric block copolymer according to any of Claims 1 to 12, and/or
   (ii) with at least one block copolymer which is composed of at least one block A which forms a hard phase and which comprises copolymerized units of at least one vinylaromatic monomer, and optionally of at least one block B which forms a first elastomeric (soft) phase and which comprises a, or a plurality of various, diene monomer(s), and of at least one elastomeric block B/A which forms a soft phase and which comprises copolymerized units not only of at least one vinylaromatic monomer but also of at least one diene, where the glass transition temperature Tg of the block B/A is below 0°C, and the proportion of the hard phase, based on the entire block copolymer, is from 1 to 40% by weight, and the total proportion by weight of the units based on the at least one vinylaromatic monomer is at least 40% by weight.

17. Use of elastomeric block copolymers according to any of Claims 1 to 12, or of a thermoelastic elastomeric molding composition according to Claim 15, or of a mixture according to Claim 16, for producing moldings, such as foils, foams, thermoformed moldings, injection moldings; or of flexible tubing or extruded profiles; or as adhesive layer in multilayer foils; as seal; as adhesion promoter or thermoplastic component in wood-plastics composites; as hot-melt adhesive component; for impact-modifying thermoplastics or elastomers, or for compatibilization in polymer mixtures that are otherwise incompatible.

18. Foils, foams, thermoformed moldings, injection moldings, flexible tubings, or extruded profiles composed of at least one elastomeric block copolymer according to any of Claims 1 to 12 and/or of at least one thermoelastic elastomeric molding composition according to Claim 15, and/or one mixture according to Claim 16.

## Revendications

1. Copolymère séquencé élastique caoutchouteux à architecture moléculaire en forme d'étoile, l'architecture moléculaire en forme d'étoile comprenant au moins deux branches d'étoile différentes, au moins une branche d'étoile étant formée à partir d'au moins une séquence A formant une phase dure comprenant des unités copolymérisées d'au moins un monomère aromatique de vinyle, et éventuellement d'au moins une séquence B formant une première phase (souple) élastique caoutchouteuse, comprenant un ou plusieurs monomères diènes différents, et d'au moins une séquence B/A élastomère formant une phase souple, comprenant des unités copolymérisées aussi bien d'au moins un monomère aromatique de vinyle que d'au moins un diène, la température de transition vitreuse Tg de la séquence B/A étant inférieure à 0 °C et la proportion de la phase dure par rapport au copolymère séquencé total étant de 1 à 40 % en poids, et la proportion en poids totale des unités à base du ou des monomères aromatiques de vinyle étant d'au moins 40 % en poids.

2. Copolymère séquencé élastique caoutchouteux selon la revendication 1, **caractérisé en ce que** le copolymère séquencé comprend 2 à 10, de préférence 3 à 6, de manière particulièrement préférée 3 ou 4 branches d'étoile.

3. Copolymère séquencé élastique caoutchouteux selon la revendication 1 ou 2, **caractérisé en ce que** le monomère aromatique de vinyle est choisi parmi le styrène et ses dérivés substitués en position $\alpha$ ou sur le cycle aromatique avec des radicaux alkyle de 1 à 4 atomes de carbone, et leurs mélanges, ainsi qu'en combinaison avec le 1,1-diphényléthylène, de préférence le styrène, l'$\alpha$-méthylstyrène, le p-méthylstyrène, l'éthylstyrène, le tert.-butylstyrène, le vinyltoluène, le 1,1-diphényléthylène et leurs mélanges, de manière particulièrement préférée le styrène.

4. Copolymère séquencé élastique caoutchouteux selon l'une quelconque des revendications 1 à 3, **caractérisé en ce que** le diène est un diène contenant des doubles liaisons conjuguées, de préférence choisi parmi le 1,3-butadiène, l'isoprène, le 2,3-diméthylbutadiène, le 1,3-pentadiène, le 1,3-hexadiène, le phénylbutadiène, le pipérylène et leurs mélanges, de manière particulièrement préférée le 1,3-butadiène et l'isoprène et leurs mélanges.

5. Copolymère séquencé élastique caoutchouteux selon l'une quelconque des revendications 1 à 4, **caractérisé en ce que** la ou les séquences A formant une phase dure sont formées à partir de monomères de styrène, la ou les séquences B éventuellement présentes, formant une phase (souple) élastique caoutchouteuse, sont formées à partir de monomères de 1,3-butadiène et/ou de monomères d'isoprène, et la ou les séquences B/A formant une phase souple sont formées à partir de monomères de styrène en tant que monomères aromatiques de vinyle et de monomères de 1,3-butadiène et/ou de monomères d'isoprène en tant que monomères diènes.

6. Copolymère séquencé élastique caoutchouteux selon l'une quelconque des revendications 1 à 5, **caractérisé en ce que** deux séquences A sont présentes dans au moins une branche d'étoile, de préférence de masses molaires différentes, la séquence extérieure dans la ou les branches d'étoile ayant de manière particulièrement préférée une masse molaire plus élevée que la séquence intérieure.

7. Copolymère séquencé élastique caoutchouteux selon l'une quelconque des revendications 1 à 6, **caractérisé en ce que** la phase souple B/A est formée à partir de 2 séquences B/A différentes ou plus, les séquences B/A différant au niveau de leurs poids moléculaires et/ou de leurs rapports composé aromatique de vinyle/diène.

8. Copolymère séquencé élastique caoutchouteux selon l'une quelconque des revendications 1 à 6, **caractérisé en ce que**, dans la séquence B/A, p sections de répétition (séquences partielles) à structure monomère variable sont présentes, telles que formées par ajout en p portions des monomères, p signifiant 2 à 10, ou une modification du rapport entre les monomères B/A a lieu sous la forme d'un gradient, jusqu'à l'ajout exclusif du monomère B.

9. Copolymère séquencé élastique caoutchouteux selon la revendication 8, **caractérisé en ce que** la composition dans la séquence B/A change de manière à ce qu'aucune séquence partielle définie ne soit formée, mais plutôt de manière à ce qu'un gradient de composition soit présent, avec de préférence $(B/A)_{p1} > (B/A)_{p2} > (B/A)_{p3}$, les sections partielles $(B/A)_{p1}$ et/ou $(B/A)_{p3}$ pouvant être remplacées selon un mode de réalisation par $B_{p1}$ et $B_{p3}$.

10. Copolymère séquencé élastique caoutchouteux selon l'une quelconque des revendications 1 à 9, **caractérisé en ce que** le copolymère séquencé présente une des formules générales suivantes :

$$Y[(B/A-A)_n]_m[A]_l$$

$$Y[(A-B/A)_n-A]_m[A]_l$$

A représentant une séquence aromatique de vinyle et B/A représentant une séquence élastomère comprenant des unités copolymérisées aussi bien d'au moins un monomère aromatique de vinyle que d'au moins un diène, qui peut elle-même être répartie en des séquences élastomères présentant différents rapports diène/composé aromatique de vinyle ou présenter un gradient, Y représentant le radical d'un agent de couplage (m+1)-fonctionnel, et m et 1 représentant indépendamment l'un de l'autre 1 à 10, de préférence 1, 2, 3 ou 4, de manière particulièrement préférée 1 ou 2, la somme (m+1) correspondant à la fonctionnalité de l'agent de couplage, et n signifiant 1 à 10, de préférence 1, 2 ou 3, de manière particulièrement préférée 1.

11. Copolymère séquencé élastique caoutchouteux selon la revendication 10, **caractérisé en ce que** m signifie 2.

12. Copolymère séquencé élastique caoutchouteux selon la revendication 10 ou 11, **caractérisé en ce que** n signifie 1.

13. Procédé de fabrication d'un copolymère séquencé élastique caoutchouteux selon l'une quelconque des revendications 1 à 12 par polymérisation anionique au moyen d'au moins un initiateur et avec ajout d'au moins un agent de couplage, **caractérisé en ce qu'**une partie du ou des initiateurs est ajoutée au début de la polymérisation et la partie restante de l'initiateur est ajoutée à un ou plusieurs moments ultérieurs.

14. Procédé selon la revendication 13, **caractérisé en ce que** l'agent de couplage est un composé bi- ou polyfonctionnel, de préférence choisi parmi les huiles végétales époxydées telles que l'huile de lin époxydée ou l'huile de soja époxydée, les silanes tels que les alcoxysilanes, p. ex. $Si(OMe)_4$, les chlorosilanes tels que $SiCl_4$, $Si(alkyle)_2Cl_2$, $Si(alkyle)Cl_3$, alkyle
représentant un radical alkyle en $C_1$ à $C_4$, de préférence méthyle, les halogénures d'hydrocarbures aliphatiques tels que le dibromométhane ou le bischlorométhylbenzène, le tétrachlorure d'étain, les aldéhydes polyfonctionnels tels que le dialdéhyde d'acide téréphtalique, les cétones polyfonctionnelles, les esters polyfonctionnels tels que les esters d'acides carboxyliques, p. ex. l'ester éthylique de l'acide acétique, l'ester diéthylique de l'acide succinique, l'ester diméthylique ou diéthylique de l'acide adipique, les anhydrides polyfonctionnels et les di- et oligo-époxydes tels que l'éther glycidylique de 1,4-butanediol, les dioléfines activées telles que le diisopropénylbenzène, le divinylbenzène ou le distyrylbenzène ; les agents de couplage préférés étant les huiles végétales époxydées telles que l'huile de lin époxydée ou l'huile de soja époxydée et les silanes tels que les alcoxysilanes, p. ex. $Si(OMe)_4$.

15. Matériau de moulage élastomère thermoplastique pouvant être obtenu par hydrogénation du copolymère séquencé élastique caoutchouteux selon l'invention.

16. Mélange contenant au moins un copolymère séquencé élastique caoutchouteux selon l'une quelconque des revendications 1 à 12,

  (i) avec au moins un autre copolymère séquencé élastique caoutchouteux selon l'une quelconque des revendications 1 à 12, et/ou
  (ii) avec au moins un copolymère séquencé formé à partir d'au moins une séquence A formant une phase dure, comprenant des unités copolymérisées d'au moins un monomère aromatique de vinyle, et éventuellement d'au moins une séquence B formant une première phase (souple) élastique caoutchouteuse, comprenant un ou plusieurs monomères diènes différents, et d'au moins une séquence B/A élastomère formant une phase souple, comprenant des unités copolymérisées aussi bien d'au moins un monomère aromatique de vinyle que d'au moins un diène, la température de transition vitreuse Tg de la séquence B/A étant inférieure à 0 °C et la proportion de la phase dure par rapport au copolymère séquencé total étant de 1 à 40 % en poids, et la proportion en poids totale des unités à base du ou des monomères aromatiques de vinyle étant d'au moins 40 % en poids.

17. Utilisation de copolymères séquencés élastiques caoutchouteux selon l'une quelconque des revendications 1 à 12 ou d'un matériau de moulage élastomère thermoélastique selon la revendication 15 ou d'un mélange selon la revendication 16 pour la fabrication de pièces moulées telles que des films, des mousses, des produits moulés thermiquement, des produits moulés par injection ; de tuyaux ou d'extrudés de profilés ; en tant que couche adhésive dans des films multicouches ; en tant que vitrification ; en tant que promoteur d'adhésion ou composant thermoplastique dans des composites bois-plastique ; en tant que composant de colle thermofusible ; pour la modification de la résistance aux impacts de thermoplastiques ou d'élastomères ou pour la compatibilisation dans des mélanges polymères sinon incompatibles.

18. Films, mousses, produits moulés thermiquement, produits moulés par injection, tuyaux ou extrudés de profilés formés à partir d'au moins un copolymère séquencé élastique caoutchouteux selon l'une quelconque des revendications 1 à 12 et/ou d'au moins un matériau de moulage élastomère thermoplastique selon la revendication 15 et/ou d'un mélange selon la revendication 16.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3507934 A
- US 4122134 A
- US 4086298 A
- US 4167545 A
- US 3639517 A
- WO 9535335 A1
- DE 19615533 A1
- US 20030181584 A1
- WO 9535335 A
- US 3985830 A
- US 3280084 A
- US 3637554 A
- US 4091053 A
- WO 9812240 A1